# DEMANDE DE BREVET EUROPEEN

(11) **EP 4 293 887 A1**
(43) Date de publication de la demande: **20.12.2023**
(21) Numéro de dépôt: 23178867.0
(22) Date de dépôt: 13.06.2023
(51) Int. Cl.: H02M 1/00, H02M 7/06, H02M 7/162, H02M 1/42, H02M 7/12, H02M 7/219

(54) **CONVERTISSEUR DE TENSION**

(30) Priorité: 17.06.2022 FR 2205931
(71) Demandeur: STMicroelectronics Ltd, Kowloon 999077 (HK)
(72) Inventeur: GONTHIER, Laurent, 10462 TAIPEI CITY (TW)
(74) Mandataire: Cabinet Beaumont

(57) **Abrégé**

La présente description concerne un circuit convertisseur (200) d'une première tension alternative (VAC) en une deuxième tension (VOUT) comprenant : un premier thyristor (T1) ; un premier circuit de commande (CMD1) du premier thyristor (T1) ; un circuit correcteur de facteur de puissance (1013) comprenant une bobine (L1) ; et un premier circuit (203) adapté à convertir une troisième tension (VINT2) en une quatrième tension continue (VCC_CMD), dans lequel la troisième tension (VINT2) correspond à la différence de potentiel entre le potentiel d'un premier noeud (N4) relié à un noeud de sortie de la bobine (L1), et un potentiel de référence (N2) ; et la quatrième tension continue (VCC_CMD) est configurée pour alimenter le premier circuit de commande (CMD1) du premier thyristor (T1), et est référencée par rapport au même potentiel de référence (N2) que la troisième tension.

## Description

### Domaine technique

La présente description concerne de façon générale les dispositifs et circuits électroniques. La présente description, concerne, de façon plus particulière, les circuits convertisseurs de tension, et plus précisément les circuits adaptés à convertir une tension alternative en une autre tension alternative ou en une tension continue.

### Technique antérieure

La conversion de puissance, et en particulier la conversion d'une tension alternative en une autre tension alternative ou une tension continue, est un domaine technique en constante évolution et en constant développement.

Il serait souhaitable de pouvoir améliorer, au moins en partie, certains aspects des circuits convertisseurs de tension.

### Résumé de l'invention

Il existe un besoin pour des circuits convertisseurs de tension plus performants.

Il existe un besoin pour des circuits convertisseurs de tension utilisant une unique tension d'alimentation.

Il existe un besoin pour des circuits convertisseurs de tension n'utilisant qu'un nombre réduit de sources de tensions d'alimentation.

Il existe un besoin pour des circuits convertisseurs de tension n'utilisant qu'une seule source de tension d'alimentation.

Il existe un besoin pour des circuits convertisseurs de tension ayant un encombrement moindre.

Il existe un besoin pour des circuits convertisseurs de tension ayant de meilleures performances.

Un mode de réalisation pallie tout ou partie des inconvénients des circuits convertisseurs de tension connus.

Un mode de réalisation prévoit un circuit convertisseur d'une première tension alternative en une deuxième tension comprenant :
- un premier thyristor ;
- un premier circuit de commande du premier thyristor ;
- un circuit correcteur de facteur de puissance comprenant une bobine ; et
- un premier circuit adapté à convertir une troisième tension en une quatrième tension continue,
dans lequel la troisième tension correspond à la différence de potentiel entre le potentiel d'un premier noeud relié à un noeud de sortie de la bobine, et un potentiel de référence ;
et
la quatrième tension continue est configurée pour alimenter le premier circuit de commande du premier thyristor, et est référencée par rapport au même potentiel de référence que la troisième tension.

Selon un mode de réalisation, le premier circuit comprend :
- un deuxième noeud recevant la troisième tension ;
- un troisième noeud fournissant la quatrième tension ; et
- un quatrième noeud recevant le potentiel de référence.

Selon un mode de réalisation, le premier circuit comprend :
- un premier transistor bipolaire dont le collecteur est relié au deuxième noeud, et l'émetteur est relié au troisième noeud ;
- une première diode Zener dont l'anode est reliée au troisième noeud t la cathode est reliée à la base du premier transistor ;
- une deuxième diode Zener dont l'anode est reliée au quatrième noeud et la cathode est reliée à la base du premier transistor ; et
- un premier condensateur reliant troisième noeud au le quatrième noeud.

Selon un mode de réalisation, le premier circuit comprend :
- un deuxième condensateur dont une première électrode est reliée au deuxième noeud ;
- une troisième diode Zener dont l'anode est reliée au quatrième noeud et la cathode est reliée à une deuxième électrode du deuxième condensateur ;
- une première diode dont l'anode est reliée à l'anode de la diode Zener et la cathode est reliée au troisième noeud ; et
- un troisième condensateur reliant le troisième noeud et le quatrième noeud.

Selon un mode de réalisation, le premier circuit comprend, en outre un circuit de précharge comprenant une deuxième diode dont la cathode est reliée au troisième noeud et dont l'anode est reliée à un cinquième noeud recevant une tension d'alimentation du circuit convertisseur.

Selon un mode de réalisation, le premier circuit comprend :
- une quatrième diode Zener dont l'anode est reliée au deuxième noeud ;
- un quatrième condensateur dont une première électrode est reliée à la cathode de la quatrième diode Zener ;
- une cinquième diode Zener dont l'anode est reliée au quatrième noeud et dont la cathode est reliée à une deuxième électrode du quatrième condensateur ;
- une troisième diode dont l'anode est reliée à la cathode de la cinquième diode Zener et dont la cathode est reliée au troisième noeud ;
- un cinquième condensateur reliant le troisième noeud et le quatrième noeud ;
- une sixième diode dont l'anode est reliée à la cathode de la quatrième diode Zener et dont la cathode est reliée à un quatrième noeud ; et
- un sixième condensateur reliant le quatrième noeud et le deuxième noeud.

Selon un mode de réalisation, le premier circuit est adapté à fournir, en outre, une cinquième tension continue configurée pour alimenter un deuxième circuit de commande d'un deuxième transistor de type NMOS faisant partie du circuit correcteur de facteur de puissance.

Selon un mode de réalisation, le premier noeud est le noeud de sortie de la bobine.

Selon un mode de réalisation, le premier noeud est relié au noeud de sortie de la bobine par l'intermédiaire d'au moins un transistor de type NMOS.

Selon un mode de réalisation, le premier noeud est relié au noeud de sortie de la bobine par l'intermédiaire d'une diode.

Selon un mode de réalisation, le premier noeud est relié au noeud de sortie de la bobine par l'intermédiaire d'au moins deux transistors de type NMOS.

Selon un mode de réalisation, le circuit comprend un premier étage de conversion comprenant :
- le premier thyristor ;
- le premier circuit de commande du premier thyristor ;
- un circuit correcteur de facteur de puissance,
le premier noeud étant un noeud de sortie du premier étage de conversion.

Selon un mode de réalisation, le circuit comprend en outre un deuxième thyristor et un deuxième circuit de commande.

Selon un mode de réalisation, la deuxième tension est une tension alternative.

Selon un mode de réalisation, la deuxième tension est une tension continue.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, très schématiquement et sous forme de blocs, un mode de réalisation d'un convertisseur de tension ;
la figure 2 représente un schéma électrique, partiellement sous forme de blocs, d'un premier mode de réalisation d'un convertisseur de tension ;
la figure 3 représente un schéma électrique d'un premier exemple de réalisation d'une partie du convertisseur de la figure 1 ou de la figure 2 ;
la figure 4 représente un schéma électrique d'un deuxième exemple de réalisation d'une partie du convertisseur de la figure 1 ou de la figure 2 ;
la figure 5 représente un schéma électrique d'un premier exemple de réalisation d'un circuit adapté à convertir une tension faisant partie du convertisseur de la figure 1 ou de la figure 2 ;
la figure 6 représente deux ensembles de courbes illustrant le fonctionnement du convertisseur de la figure 2 lorsqu'il comprend le circuit de la figure 5 selon un premier exemple ;
la figure 7 représente deux ensembles de courbes illustrant le fonctionnement du convertisseur de la figure 2 lorsqu'il comprend le circuit de la figure 5 selon un deuxième exemple ;
la figure 8 représente un schéma électrique d'un deuxième exemple de réalisation d'un autre circuit adapté à convertir une tension faisant partie du convertisseur de la figure 1 ou de la figure 2 ;
la figure 9 représente deux ensembles de courbes illustrant le fonctionnement du convertisseur de la figure 2 lorsqu'il comprend le circuit de la figure 8 selon un premier exemple ;
la figure 10 représente deux ensembles de courbes illustrant le fonctionnement du convertisseur de la figure 2 lorsqu'il comprend le circuit de la figure 8 selon un deuxième exemple ;
la figure 11 représente un schéma électrique d'un troisième exemple de réalisation d'un autre circuit adapté à convertir une tension faisant partie du convertisseur de la figure 1 ou de la figure 2 ;
la figure 12 représente deux ensembles de courbes illustrant le fonctionnement du convertisseur de la figure 2 lorsqu'il comprend le circuit de la figure 11 selon un premier exemple ;
la figure 13 représente deux ensembles de courbes illustrant le fonctionnement du convertisseur de la figure 2 lorsqu'il comprend le circuit de la figure 11 selon un deuxième exemple ;
la figure 14 représente un schéma électrique, partiellement sous forme de blocs, d'un deuxième mode de réalisation d'un convertisseur de tension ;
la figure 15 représente un schéma électrique, partiellement sous forme de blocs, d'un troisième mode de réalisation d'un convertisseur de tension ;
la figure 16 représente deux ensembles de courbes illustrant un premier mode de fonctionnement du convertisseur de la figure 15 ;
la figure 17 représente deux ensembles de courbes illustrant un deuxième mode de fonctionnement du convertisseur de la figure 15 ;
la figure 18 représente un schéma électrique, partiellement sous forme de blocs, d'un quatrième mode de réalisation d'un convertisseur de tension ;
la figure 19 représente deux ensembles de courbes illustrant le fonctionnement du convertisseur de la figure 18 ; et
la figure 20 représente un schéma électrique, partiellement sous forme de blocs, d'un cinquième mode de réalisation d'un convertisseur de tension.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

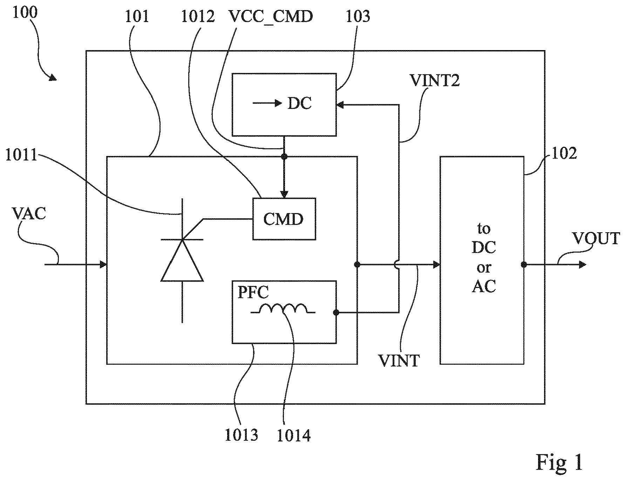

La figure 1 représente, très schématiquement et sous forme de blocs, un mode de réalisation d'un convertisseur de tension 100.

Le convertisseur de tension 100 est un circuit adapté à convertir une tension alternative d'entrée, notée tension VAC, en une tension de sortie VOUT. La tension de sortie VOUT peut être une tension alternative ou une tension continue.

Le convertisseur de tension 100 comprend un premier étage de conversion 101, aussi appelé étage d'adaptation de la tension d'entrée VAC, et un deuxième étage de conversion 102 (to DC or AC) fournissant la tension de sortie VOUT. Le premier étage de conversion 101 fournit une tension intermédiaire VINT au deuxième étage de conversion 102.

Le premier étage de conversion 101 comprend :
- au moins un thyristor 1011 ;
- un circuit de commande 1012 du thyristor 1011 ; et
- un circuit correcteur de facteur de puissance 1013 (Power Factor Correction, PFC) comprenant au moins une bobine 1014.

Le circuit de commande 1012 fournit une tension de commande à la gâchette du thyristor 1011. Le circuit de commande 1012 est un circuit de commande, ou circuit de pilotage (driver), ou circuit de commande rapproché, dédié à transmettre des commandes au thyristor 1011. Selon un exemple, le circuit de commande 1012 reçoit un signal de commande de la part d'une unité de commande du dispositif 100. Ce signal de commande n'est pas adapté à être traité directement par le thyristor 1011. Le circuit de commande rapproché 1012 est adapté à traiter le signal de commande de l'unité de commande pour fournir la tension de commande à la gâchette du thyristor 1011.

Le deuxième étage de conversion 102 permet de convertir la tension intermédiaire VINT en la tension de sortie VOUT. Le deuxième étape de conversion 102 peut, selon un premier exemple, convertir la tension VINT en une tension continue, ou, selon un deuxième exemple, convertir la tension VINT en une tension alternative.

Selon un mode de réalisation, le convertisseur 100 comprend, en outre, un circuit 103 adapté à fournir une tension d'alimentation VCC_CMD continue au circuit de commande 1012. Selon un exemple, le circuit 103 peut faire partie du premier étage de conversion 101.

Le circuit 103 est un circuit adapté à convertir une tension interne VINT2 du premier étage de conversion 101 en la tension d'alimentation VCC_CMD continue, les tensions VCC_CMD et VINT2 étant référencées par rapport à un même noeud. Ainsi, le circuit 103 est un circuit adapté à convertir une tension alternative en une tension continue, ou à convertir une première tension continue en une deuxième tension continue.

La tension interne VINT2 correspond à la différence de potentiels entre un premier potentiel pris au niveau d'un noeud relié à la sortie de la bobine 1014 du circuit correcteur de facteur de puissance 1013, et un deuxième potentiel de référence pris au niveau d'un noeud de l'étage 101. Autrement dit, le premier potentiel de la tension interne VINT2 est pris à un noeud relié à une borne de la bobine 1014 différente de la borne de la bobine recevant la tension d'entrée VAC. Le deuxième potentiel de référence de la tension VINT est le potentiel d'un noeud de référence du circuit 103 connecté à un noeud de l'étage 201. Selon une variante, le potentiel interne VINT2 peut être pris au niveau d'un noeud appartenant au deuxième étage de conversion 102. Des exemples précis de potentiel VINT2 sont décrits ci-après.

La tension d'alimentation VCC_CMD continue correspond à la différence de potentiels entre un noeud de sortie du circuit 103 et du deuxième potentiel de référence, identique au deuxième potentiel de référence de la tension VINT2.

Un avantage de ce mode de réalisation est qu'il permet d'utiliser un potentiel dérivé du potentiel d'entrée VAC pour alimenter le circuit de commande 1012, et donc d'éviter de devoir fournir une tension d'alimentation spécifique pour le circuit de commande 1012. En effet, il est bien connu d'utiliser un circuit d'alimentation externe, comme un transformateur magnétique, pour fournir cette tension d'alimentation. L'utilisation de ce mode de réalisation permet donc de réduire le nombre de composant du circuit convertisseur de tension, et de réduire son encombrement.

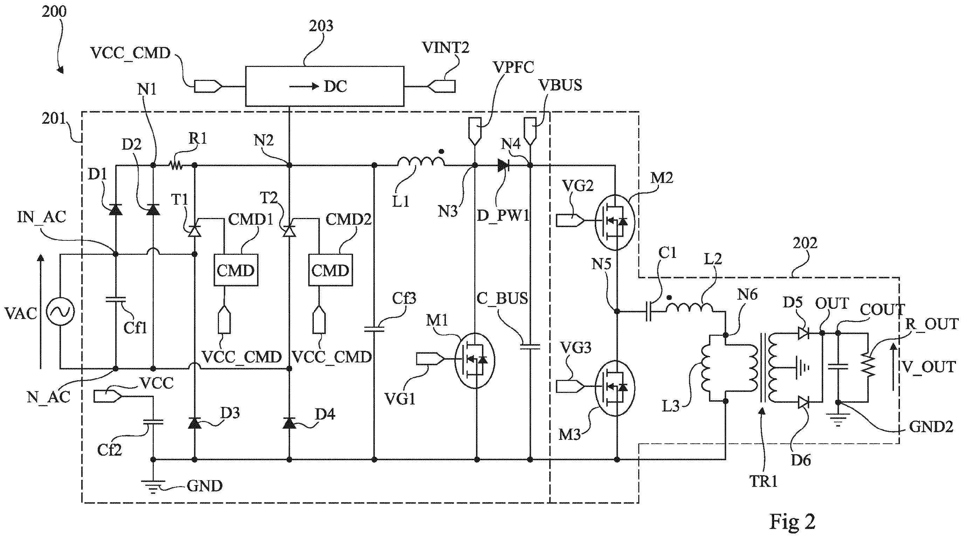

Des exemples plus détaillés de convertisseur de tension sont décrits en relation avec les figures 2 à 20.

La figure 2 est un premier exemple de réalisation d'un convertisseur de tension 200 du type du convertisseur de tension 100 décrit en relation avec la figure 1. Plus particulièrement, la figure 2 est un schéma électrique, partiellement sous forme de blocs, du convertisseur de tension 200.

Comme le convertisseur de tension 100 de la figure 1, le convertisseur 200 comprend :
- un premier étage de conversion 201 ;
- un deuxième étage de conversion 202 ; et
- un circuit 203 (-> DC) adapté à convertir une tension interne du premier étage de conversion 201 en une tension d'alimentation.

Comme décrit en relation avec la figure 1, le premier étage de conversion 201 reçoit la tension d'entrée alternative VAC et fournit en sortie une tension intermédiaire VBUS, correspondant à la tension intermédiaire VINT en figure 1. Le deuxième étage de conversion 202 reçoit la tension intermédiaire VBUS et fournit en sortie la tension de sortie VOUT. Le circuit 203 reçoit une tension interne VINT2 de l'étage de conversion 201 pour fournir en sortie une tension d'alimentation VCC_CMD.

Le premier étage de conversion 201 comprend deux noeuds d'entrée IN_AC et N_AC recevant la tension d'entrée alternative VAC.

L'étage 201 comprend, en outre, un pont de diodes redresseur de tension comprenant quatre diodes D1, D2, D3, et D4. Le pont de diodes est adapté à redresser la tension VAC. Selon un exemple, la diode D1 a son anode reliée, de préférence connectée, au noeud IN_AC, et sa cathode reliée, de préférence connectée, à un noeud N1 de sortie du pont de diodes. La diode D2 a son anode reliée, de préférence connectée, au noeud N_AC, et sa cathode reliée, de préférence connectée, au noeud N1. La diode D3 a son anode reliée, de préférence connectée, à un noeud GND recevant un potentiel de référence, par exemple la masse, et sa cathode reliée, de préférence connectée, au noeud IN_AC. La diode D4 a son anode reliée, de préférence connectée, au noeud GND, et sa cathode reliée, de préférence connectée, au noeud N_AC. La tension de sortie du pont de diodes est la tension entre les noeuds N1 et GND.

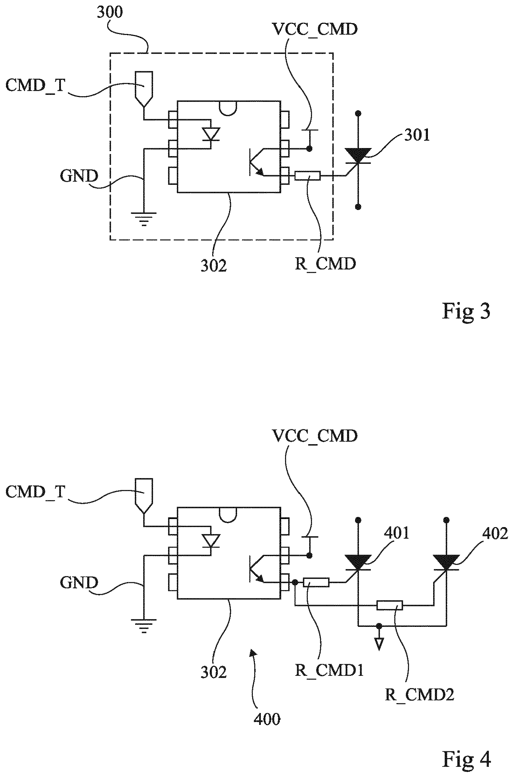

L'étage 201 comprend, en outre, deux thyristors T1 et T2 et leurs circuits de commande respectifs CMD1 (CMD) et CMD2 (CMD). Le thyristor T1 a sa cathode reliée, de préférence connectée, à un noeud N2, et son anode reliée, de préférence connectée, au noeud IN_AC. La gâchette du thyristor T1 est reliée, de préférence connectée, à une sortie du circuit de commande CMD1. Le circuit de commande CMD1 est alimenté par la tension VCC_CMD fournie par le circuit 203. Le thyristor T2 a sa cathode reliée, de préférence connectée, à un noeud N2, et son anode reliée, de préférence connectée, au noeud N_AC. La gâchette du thyristor T2 est reliée, de préférence connectée, à une sortie du circuit de commande CMD2. Le circuit de commande CMD2 est alimenté par la tension VCC_CMD fournie par le circuit 203. L'étage 201 comprend, en outre, une résistance R1 disposée entre les noeuds N1 et N2. Des exemples plus détaillés des circuits de commande CMD1 et CMD2 sont décrits en relation avec les figures 3 et 4.

L'étape 201 comprend, en outre, un circuit correcteur de facteur de puissance comportant une bobine L1, un transistor M1 et une diode D_FW1. La bobine L1 comprend une première borne reliée, de préférence connectée, au noeud N2, aussi appelée borne d'entrée de la bobine L1. La bobine L1 comprend une deuxième borne reliée, de préférence connectée, à un noeud N3, aussi appelé borne de sortie de la bobine L1. Le transistor M1 est un transistor MOS de type N, c'est-à-dire un transistor à effet de champ à grille isolée, aussi nommé MOSFET (Métal Oxide Semiconductor Field Effect Transistor), dont la région de canal est de type N. La source du transistor M1 est reliée, de préférence connectée, au noeud GND, et le drain du transistor M1 est relié, de préférence connecté, au noeud N3. La grille du transistor M1 reçoit un potentiel de commande VG1. La diode D_FW1 a son anode reliée, de préférence connectée, au noeud N3, et sa cathode reliée, de préférence connectée, à un noeud N4 de sortie du circuit correcteur de facteur de puissance.

Le premier étage de conversion 201 comprend, en outre, une capacité C_BUS placé entre les noeuds N4 et GND, mais comprend aussi, de façon optionnelle, un ou plusieurs condensateurs de filtrage parmi lesquels :
- un condensateur Cf1 placé entre les noeuds IN_AC et N_AC ;
- un condensateur Cf2 placé entre le noeud GND et un noeud recevant un potentiel d'alimentation continue VCC du convertisseur 200 ; et
- un condensateur Cf3 placé entre les noeuds N2 et GND.

La tension intermédiaire VBUS fournie par l'étage 201 est la différence de potentiel entre les noeuds N4 et GND.

Le deuxième étage de conversion 202 représenté en figure 2 est un exemple d'étage de conversion 202 permettant de fournir une tension de sortie VOUT continue. D'autres types d'étage 202 pourront être envisagés par, et sont à la portée, de la personne du métier. En particulier, la personne du métier saura imaginer un étage de conversion 202 permettant de fournir une tension de sortie VOUT alternative.

Le deuxième étage 202 comprend un circuit de découpage comportant deux transistors M2 et M3. Les transistors M2 et M3 sont des transistors MOS de type N. La source du transistor M2 est reliée, de préférence connectée, à un noeud N5, et le drain du transistor M2 est relié, de préférence connecté, au noeud N4. La grille du transistor M2 reçoit un potentiel de commande VG2. La source du transistor M3 est reliée, de préférence connectée, au noeud GND, et le drain du transistor M3 est relié, de préférence connecté, au noeud N5. La grille du transistor M3 reçoit un potentiel de commande VG3.

Le deuxième étage de conversion 202 comprend, en outre, un circuit convertisseur à résonnance comportant un condensateur C1 et deux bobines L2 et L3. Une première électrode du condensateur C1 est reliée, de préférence connectée, au noeud N5 formant le noeud d'entrée du deuxième étage de conversion 202. Une première borne de la bobine L2 est reliée, de préférence connectée, à la deuxième électrode du condensateur C1, et une deuxième borne de la bobine L2 est reliée, de préférence connectée, à un noeud N6. Une première borne de la bobine L3 est reliée, de préférence connectée, au noeud N6, et une deuxième borne de la bobine L2 est reliée, de préférence connectée, au noeud GND formant le deuxième noeud d'entrée du deuxième étage de conversion 202.

Le deuxième étage de conversion 202 comprend, en outre, un transformateur TR1 comprenant deux bornes d'entrée et deux bornes de sortie. Chaque borne d'entrée du transformateur TR1 est reliée à une borne de la bobine L3. Autrement dit, une première borne d'entrée du transformateur TR1 est reliée, de préférence connectée, au noeud N6, et une deuxième borne d'entrée du transformateur TR1 est reliée, de préférence connectée, au noeud GND.

Le deuxième étage de conversion 202 comprend, en outre, deux diodes D5 et D6 placées au niveau des bornes de sortie du transformateur TR1. L'anode de la diode D5 est reliée, de préférence connectée, à une première borne de sortie du transformateur TR1, et la cathode de la diode D5 est reliée, de préférence connectée, à un noeud OUT, formant le noeud de sortie de l'étage 202. L'anode de la diode D6 est reliée, de préférence connectée, à une deuxième borne de sortie du transformateur TR1, et la cathode de la diode D6 est reliée, de préférence connectée, au noeud OUT.

Le deuxième étage de conversion 202 comprend, en outre, un circuit RC comportant une résistance R_OUT et un condensateur C_OUT reliés en parallèle. Autrement dit, une première électrode du condensateur C_OUT est reliée, de préférence connectée, au noeud OUT, et une deuxième électrode du condensateur C_OUT est reliée, de préférence connectée, au noeud GND. Une première borne de la résistance R_OUT est reliée, de préférence connectée, au noeud OUT, et une deuxième borne de la résistance R_OUT est reliée, de préférence connectée, à un noeud de référence GND2, correspondant à une deuxième masse.

La tension de sortie VOUT du deuxième étage de conversion 202 est la différence de potentiels entre les noeuds OUT et GND2.

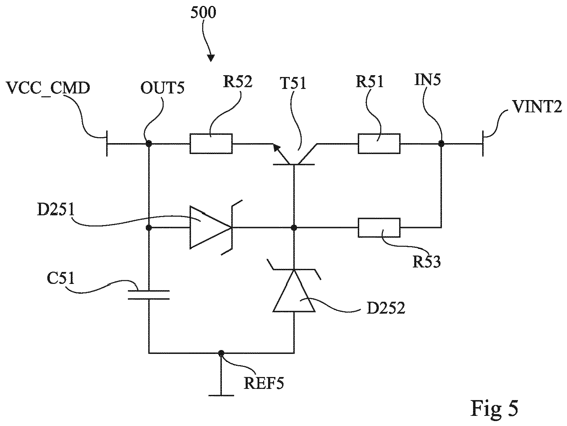

Le circuit 203 est représenté en figure 2 par un bloc relié au noeud N2 de l'étage 201, fournissant la tension VCC_CMD, référencée par rapport au potentiel du noeud N2, et recevant une tension interne VINT2, référencée par rapport au potentiel du noeud N2. La tension interne VINT2 correspond à la différence entre un potentiel interne et le potentiel présent au niveau du noeud N2. Le potentiel interne peut être pris au niveau de différents noeuds de l'étage 201, par exemple, au niveau des noeuds N3, N4, ou par exemple au niveau du noeud N5 de l'étage 202. Plusieurs exemples du circuit 203 ainsi que leur fonctionnement, en fonction de la tension VINT2 choisie, sont décrits en relation avec les figures 5 à 13. Plus particulièrement, trois exemples de circuit 203 sont décrits, et plusieurs exemples de fonctionnement de chaque exemple de circuit 203 sont détaillés.

La figure 3 est un schéma électrique d'un exemple de réalisation d'un circuit de commande 300 d'un thyristor 301. Le circuit de commande 300 est un exemple de circuit de commande pouvant être utilisé dans un convertisseur du type du convertisseur 100 décrit en relation avec la figure 1 ou du type du convertisseur 200 décrit en relation avec la figure 2.

Le circuit de commande 300 comprend un phototransistor 302. En pratique le phototransistor 302 est un transistor bipolaire de type NPN dont la base est commandée par le courant traversant une photodiode. La photodiode reçoit au niveau de son anode un potentiel de commande CMD_T, et est reliée, de préférence connectée, par sa cathode à un noeud GND recevant un potentiel de référence, par exemple la masse. Le transistor bipolaire reçoit, au niveau de son collecteur la tension d'alimentation VCC_CMD, fournie par un circuit du type des circuits 103 de la figure 1 ou 203 de la figure 2.

Le circuit de commande 300 comprend, en outre, une résistance R_CTRL dont une première borne est reliée, de préférence connectée, à l'émetteur du transistor bipolaire du phototransistor 302 et dont une deuxième borne est reliée, de préférence connectée, à la gâchette du thyristor 301.

Comme dit précédemment, le circuit 300 peut être utilisé comme circuit de commande CMD1 ou CMD2 du thyristor T1 ou T2 de la figure 2. Dans ce cas, le convertisseur 200 de la figure 2 peut comprendre deux circuits de commande CMD1 et CMD2 distincts permettant de commander indépendamment les thyristors T1 et T2. Selon une variante, le convertisseur 200, et plus particulièrement son premier étage de conversion 201, peut comprendre un circuit de commande de thyristor commun à plusieurs thyristors. La figure 4 représente un circuit de commande 400 pouvant permettre d'appliquer une même tension de commande à deux thyristors 401 et 402.

La figure 4 est donc un schéma électrique d'un exemple de réalisation d'un circuit de commande 400 de deux thyristors 401 et 402.

Le circuit de commande 400 est similaire au circuit de commande 300 décrit en relation avec la figure 3, à la différence que le circuit de commande 400 comprend deux résistances R_CMD1 et R_CMD2 en remplacement de la résistance R_CMD.

Ainsi, le circuit de commande 400 comprend :
- le phototransistor 302 de la figure 3 alimenté par les mêmes potentiels que ceux décrit en relation avec la figure 3 ;
- la résistance R_CMD1 reliant, de préférence connectant, l'émetteur du transistor bipolaire du phototransistor 302 à la gâchette du thyristor 401 ; et
- la résistance R_CMD1 reliant, de préférence connectant, l'émetteur du transistor bipolaire du phototransistor 302 à la gâchette du thyristor 402.

La figure 5 est un schéma électrique d'un premier exemple de réalisation d'un circuit 500 adapté à convertir une tension interne d'un convertisseur en une tension d'alimentation. Le circuit 500 est un exemple de circuit pouvant être utilisé comme circuit 203 dans un convertisseur du type du convertisseur 200 décrit en relation avec la figure 2.

Comme le circuit 203 décrit en relation avec la figure 2, le circuit 500 reçoit, entre un noeud d'entrée IN5 et un noeud de référence REF5, la tension interne VINT2, et fournit, entre un noeud de sortie OUT5 et un noeud de référence REF5, la tension d'alimentation continue VCC_CMD configurée pour alimenter le ou les circuits de commande des thyristors T1 et T2 du convertisseur 200. Le noeud de référence REF5 est relié, de préférence connecté, au noeud N2 du convertisseur 200.

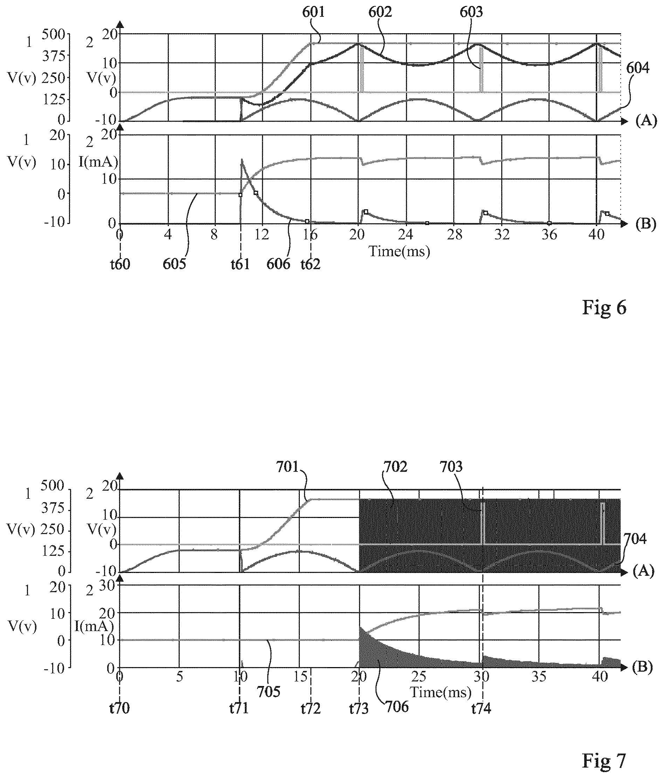

De plus, comme décrit précédemment, la tension interne VINT2 est une tension prise au niveau du premier étage de conversion 201 ou du deuxième étage 202 du convertisseur 200 de la figure 2, à un noeud relié à la sortie de l'inductance L1. Selon un exemple, la tension VINT2 peut être prise au niveau du noeud N3, N4 ou N5, en étant référencé au noeud N2 du convertisseur 200. Le fonctionnement du cas où la tension VINT2 est prise au niveau du noeud N4 est décrit en relation avec la figure 6, et le fonctionnement du cas où la tension VINT2 est prise au niveau du noeud N5 est décrit en relation avec la figure 7.

Le circuit 500 est un circuit d'alimentation linéaire comprenant une première branche comportant, en série entre les noeuds IN5 et OUT5, une résistance R51, un transistor bipolaire T51 de type NPN et une résistance R52. Plus particulièrement, une première borne de la résistance R51 est reliée, de préférence connectée, au noeud IN5, et une deuxième borne de la résistance R51 est reliée, de préférence connectée, au collecteur du transistor T51. L'émetteur du transistor T51 est relié, de préférence connectécomprend deux graphiques, à une première borne de la résistance R52. Une deuxième borne de la résistance R52 est reliée, de préférence connectée, au noeud OUT5.

Le circuit 500 comprend, en outre, une deuxième branche comportant, en série entre les noeuds IN5 et OUT5, une résistance R53 et une diode Zener DZ51. Une première borne de la résistance R53 est reliée, de préférence connectée, au noeud IN5, et une deuxième borne de la résistance R53 est reliée, de préférence connectée, à la cathode de la diode DZ51. L'anode de la diode DZ51 est reliée, de préférence connectée, au noeud OUT5. De plus, la base du transistor T51 est reliée, de préférence connectée, à la cathode de la diode DZ51.

Le circuit 500 comprend, en outre, une deuxième diode Zener DZ52 dont la cathode est reliée, de préférence connectée, à la cathode de la diode DZ51, et dont l'anode est reliée, de préférence connectée, au noeud de référence REF5.

Pour finir, le circuit 500 comprend, en outre, un condensateur C51 dont une première électrode est reliée, de préférence connectée, au noeud de sortie OUT5, et dont une deuxième électrode est reliée, de préférence connectée, au noeud de référence REF5.

La figure 6 comprend deux graphiques (A) et (B) permettant d'illustrer le fonctionnement d'un convertisseur 200 décrit en relation avec la figure 2 comprenant un circuit 500 décrit en relation avec la figure 5 dans lequel la tension interne VINT2 correspond à la tension prise entre les noeuds N4 et GND du convertisseur 200.

Les graphiques (A) et (B) comprennent des courbes illustrant l'évolution temporelle de tensions et courant du convertisseur 200, parmi lesquelles :
- une courbe 601 représentant l'évolution de la tension entre les noeuds N4 et GND, appelée tension VBUS, en figure 6 la courbe fait partie du graphique (A) et est de couleur verte ;
- une courbe 602 représentant l'évolution temporelle de la tension entre les noeuds N4 et N2, appelée tension VBUS-VCf3, en figure 6 la courbe fait partie du graphique (A) et est de couleur bleue ;
- une courbe 603 représentant l'évolution temporelle de la tension de commande commune fournie par les circuits de commande CMD1 et CMD2 aux gâchettes des thyristors T1 et T2, appelée tension VT12, en figure 6 la courbe fait partie du graphique (A) et est de couleur jaune ;
- une courbe 604 représentant l'évolution temporelle de la tension aux bornes du condensateur Cf3, c'est-à-dire de la tension entre les noeuds N2 et GND, en figure 6 la courbe fait partie du graphique (A) et est de couleur rouge ;
- une courbe 605 représentant l'évolution temporelle de la tension d'alimentation VCC_CMD fournie par le circuit 500, c'est-à-dire la tension entre les noeuds OUT5 et N2, en figure 6 la courbe fait partie du graphique (B) et est de couleur verte ; et
- une courbe 606 représentant l'évolution temporelle du courant IT51 traversant le transistor T51 du circuit 500, par convention le courant IT151 est considéré positif lorsque le courant circule depuis le collecteur vers l'émetteur du transistor T51, en figure 6 la courbe fait partie du graphique (B) et est de couleur rouge.

Avant un instant initial t60, le convertisseur 200 ne reçoit pas de tension VAC à convertir. Les tensions et courant dont l'évolution est représentée par les courbes 601 à 606 sont à un état de repos. Plus particulièrement, les tensions des courbes 601 à 605 ont toute une amplitude proche de 0 V, voir inférieure à 0 V, et le courant de la courbe 606 a une amplitude de l'ordre de 0 A.

A partir de l'instant initial t60, et jusqu'à un instant t61, postérieur à l'instant t60, le convertisseur 200 commence à recevoir une tension alternative VAC à convertir et démarre. Pendant cette phase, les condensateurs Cf3 et C_BUS sont chargés en utilisant la tension alternative VAC à convertir traversant la résistance R1, les diodes D1, D2, D3 et D4. Ainsi, à l'instant t61, la tension de la courbe 604 a augmenté jusqu'à un premier palier.

A l'instant t61, le circuit correcteur de facteur de puissance est démarré, le transistor M1 est rendu passant par sa tension de commande VG1. La tension VBUS de la courbe 601 augmente. La tension aux bornes du condensateur Cf3 devient alors périodique (voir courbe 604).

A un instant t62, postérieur à l'instant t61, la tension VBUS (courbe 601) atteint un palier assez élevé pour alimenter le circuit 500 qui fournit alors une tension VCC_CMD (voir courbe 605) assez élevée pour que la tension de commande commune de la courbe 603 puisse commander les thyristors T1 et T2.

La figure 7 comprend deux graphiques (A) et (B) permettant d'illustrer le fonctionnement d'un convertisseur 200 décrit en relation avec la figure 2 comprenant un circuit 500 décrit en relation avec la figure 5 dans lequel la tension interne VINT2 correspond à la tension prise entre les noeuds N5 et GND du convertisseur 200.

Les graphiques (A) et (B) comprennent des courbes illustrant l'évolution temporelle de tensions et courant du convertisseur 200, parmi lesquelles :
- une courbe 701 représentant l'évolution de la tension entre les noeuds N4 et GND, appelée tension VBUS, en figure 7 la courbe fait partie du graphique (A) et est de couleur verte ;
- une courbe 702 représentant l'évolution temporelle de la tension entre les noeuds N5 et GND, appelée tension VMP, en figure 7 la courbe fait partie du graphique (A) et est de couleur bleue ;
- une courbe 703 représentant l'évolution temporelle de la tension de commande commune fournie par les circuits de commande CMD1 et CMD2 aux gâchettes des thyristors T1 et T2, appelée tension VT12, en figure 7 la courbe fait partie du graphique (A) et est de couleur jaune ;
- une courbe 704 représentant l'évolution temporelle de la tension aux bornes du condensateur Cf3, c'est-à-dire de la tension entre les noeuds N2 et GND, en figure 7 la courbe fait partie du graphique (A) et est de couleur rouge ;
- une courbe 705 représentant l'évolution temporelle de la tension d'alimentation VCC_CMD fournie par le circuit 500, c'est-à-dire la tension entre les noeuds OUT5 et N2, en figure 7 la courbe fait partie du graphique (B) et est de couleur verte ; et
- une courbe 706 représentant l'évolution temporelle du courant IT51 traversant le transistor T51 du circuit 500, par convention le courant IT151 est considéré positif lorsque le courant circule depuis le collecteur vers l'émetteur du transistor T51, en figure 7 la courbe fait partie du graphique (B) et est de couleur rouge.

Le fonctionnement d'un convertisseur 200 utilisant la tension prise entre les noeuds N5 et N2 pour alimenter le circuit 500 est similaire au fonctionnement décrit en relation avec la figure 6.

Avant un instant initial t70, le convertisseur 200 ne reçoit pas de tension VAC à convertir. Les tensions et courant dont l'évolution est représentée par les courbes 701 à 706 sont à un état de repos. Plus particulièrement, les tensions des courbes 701 à 705 ont toute une amplitude proche de 0 V, voir inférieure à 0 V, et le courant de la courbe 706 a une amplitude de l'ordre de 0 A.

A partir de l'instant initial t70, et jusqu'à un instant t71, postérieur à l'instant t70, le convertisseur 200 commence à recevoir une tension alternative VAC à convertir et démarre. Pendant cette phase, les condensateurs Cf3 et C_BUS sont chargés en utilisant la tension alternative VAC à convertir circulant à travers la résistance R1, et les diodes D1, D2, D3 et D4. Ainsi, à l'instant t71, la tension de la courbe 704 a augmenté.

A l'instant t71, le circuit correcteur de facteur de puissance est démarré, le transistor M1 est rendu passant par sa tension de commande VG1. La tension VBUS de la courbe 701 augmente jusqu'à un instant t72, postérieur à l'instant t71. La tension aux bornes du condensateur Cf3 devient alors périodique (voir courbe 704).

A un instant t73, postérieur à l'instant t72, ou selon une variante de réalisation directement à l'instant t72, les transistors M2 et M3 sont rendus passant par leurs tensions de commande VG2 et VG3. La tension VMP de la courbe 702 augmente et devient périodique.

A l'instant t74, postérieur à l'instant t73, la tension VMP est assez élevée pour alimenter le circuit 500 qui fournit alors une tension VCC_CMD (voir courbe 705) assez élevée pour que la tension de commande commune de la courbe 703 puisse commander les thyristors T1 et T2 qui présente alors un premier pic ou une première impulsion de commande.

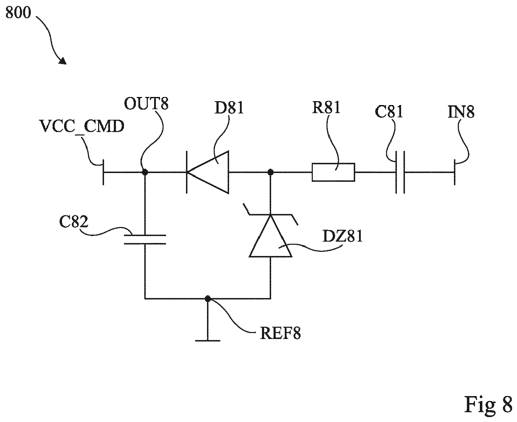

La figure 8 est un schéma électrique d'un deuxième exemple de réalisation d'un circuit 800 adapté à convertir une tension interne d'un convertisseur en une tension d'alimentation. Le circuit 800 est un exemple de circuit pouvant être utilisé comme circuit 203 dans un convertisseur du type du convertisseur 200 décrit en relation avec la figure 2.

Comme le circuit 203 décrit en relation avec la figure 2, le circuit 800 reçoit, entre un noeud d'entrée IN8 et un noeud de référence REF8, la tension interne VINT2, et fournit, entre un noeud de sortie OUT8 et un noeud de référence REF8, la tension d'alimentation continue VCC_CMD configurée pour alimenter le ou les circuits de commande des thyristors T1 et T2 du convertisseur 200. Le noeud de référence REF8 est relié, de préférence connecté, au noeud N2 du convertisseur 200.

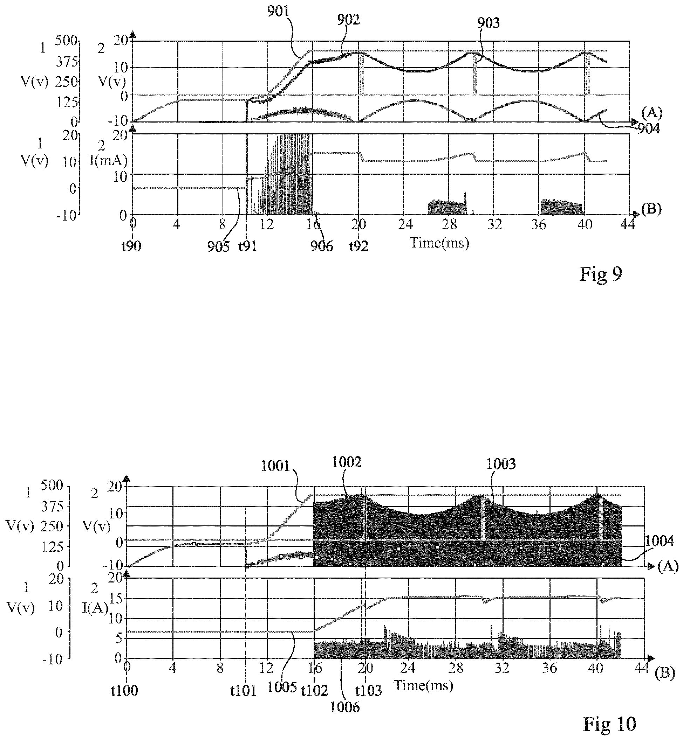

De plus, comme décrit précédemment, la tension interne VINT2 est une tension prise au niveau du premier étage de conversion 201 ou du deuxième étage 202 du convertisseur 200 de la figure 2, à un noeud relié à la sortie de l'inductance L1. Le fonctionnement du cas où la tension VINT2 est prise au niveau du noeud N4 est décrit en relation avec la figure 9, et le fonctionnement du cas où la tension VINT2 est prise au niveau du noeud N5 est décrit en relation avec la figure 10.

Le circuit 800 est un circuit d'alimentation capacitive comprenant une première branche comportant, en série entre les noeuds IN8 et OUT8, un condensateur C81, une résistance R81 et une diode D81. Plus particulièrement, une première électrode du condensateur C81 est reliée, de préférence connectée, au noeud IN8, et une deuxième électrode du condensateur C81 est reliée, de préférence connectée, à une première borne de la résistance R81. Une deuxième borne de la résistance R81 est reliée, de préférence connectée, à l'anode de la diode D81. La cathode de la diode D81 est reliée, de préférence connectée, au noeud OUT8.

Le circuit 800 comprend, en outre, une diode Zener DZ81 dont la cathode est reliée, de préférence connectée, à l'anode de la diode D81, et dont l'anode est reliée, de préférence connectée, au noeud de référence REF8.

Pour finir, le circuit 500 comprend, en outre, un condensateur C82 dont une première électrode est reliée, de préférence connectée, au noeud de sortie OUT8, et dont une deuxième électrode est reliée, de préférence connectée, au noeud de référence REF8.

La figure 9 comprend deux graphiques (A) et (B) permettant d'illustrer le fonctionnement d'un convertisseur 200 décrit en relation avec la figure 2 comprenant un circuit 800 décrit en relation avec la figure 8 dans lequel la tension interne VINT2 correspond à la tension prise entre les noeuds N4 et GND du convertisseur 200.

Les graphiques (A) et (B) comprennent des courbes illustrant l'évolution temporelle de tensions et courant du convertisseur 200, parmi lesquelles :
- une courbe 901 représentant l'évolution temporelle de la tension entre les noeuds N4 et GND, appelée tension VBUS, en figure 9 la courbe fait partie du graphique (A) et est de couleur verte ;
- une courbe 902 représentant l'évolution temporelle de la tension aux bornes du condensateur C81, appelée tension VC81, en figure 9 la courbe fait partie du graphique (A) et est de couleur bleue ;
- une courbe 903 représentant l'évolution temporelle de la tension de commande commune fournie par les circuits de commande CMD1 et CMD2 aux gâchettes des thyristors T1 et T2, appelée tension VT12, en figure 9 la courbe fait partie du graphique (A) et est de couleur jaune ;
- une courbe 904 représentant l'évolution temporelle de la tension aux bornes du condensateur Cf3, c'est-à-dire de la tension entre les noeuds N2 et GND, en figure 9 la courbe fait partie du graphique (A) et est de couleur rouge ;
- une courbe 905 représentant l'évolution temporelle de la tension d'alimentation VCC_CMD fournie par le circuit 800, c'est-à-dire la tension entre les noeuds OUT8 et N2, en figure 9 la courbe fait partie du graphique (B) et est de couleur verte ; et
- une courbe 906 représentant l'évolution temporelle du courant ID81 traversant la diode D81 du circuit 800, par convention le courant ID81 est considéré positif lorsque le courant circule depuis l'anode vers la cathode de la diode D81, en figure 9 la courbe fait partie du graphique (B) et est de couleur rouge.

Avant un instant initial t90, le convertisseur 200 ne reçoit pas de tension VAC à convertir. Les tensions et courant dont l'évolution est représentée par les courbes 901 à 906 sont à un état de repos. Plus particulièrement, les tensions des courbes 901 à 905 ont toute une amplitude proche de 0 V, voir inférieure à 0 V, et le courant de la courbe 906 a une amplitude de l'ordre de 0 A.

A partir de l'instant initial t90, et jusqu'à un instant t91, postérieur à l'instant t90, le convertisseur 200 commence à recevoir une tension alternative VAC à convertir et démarre. Pendant cette phase, les condensateurs Cf3 et C_BUS sont chargés en utilisant la tension alternative VAC à convertir traversant les diodes D1 et D2. Ainsi, à l'instant t91, la tension de la courbe 904 a augmenté.

A l'instant t91, le circuit correcteur de facteur de puissance est démarré, le transistor M1 est rendu passant par sa tension de commande VG1. La tension VBUS de la courbe 901 augmente. La tension aux bornes du condensateur Cf3 devient alors périodique (voir courbe 904).

De plus, à l'instant t91, le condensateur C82 du circuit 800 commence à se charger en utilisant le courant traversant le condensateur C81 du circuit 800.

A un instant t92, postérieur à l'instant t91, la tension VBUS est assez élevée pour alimenter le circuit 800 qui fournit alors une tension VCC_CMD (voir courbe 905) assez élevée pour que la tension de commande commune de la courbe 903 puisse commander les thyristors T1 et T2.

La figure 10 comprend deux graphiques (A) et (B) permettant d'illustrer le fonctionnement d'un convertisseur 200 décrit en relation avec la figure 2 comprenant un circuit 800 décrit en relation avec la figure 8 dans lequel la tension interne VINT2 correspond à la tension prise entre les noeuds N5 et GND du convertisseur 200.

Les graphiques (A) et (B) comprennent des courbes illustrant l'évolution temporelle de tensions et courant du convertisseur 200, parmi lesquelles :
- une courbe 1001 représentant l'évolution temporelle de la tension entre les noeuds N4 et GND, appelée tension VBUS, en figure 10 la courbe fait partie du graphique (A) et est de couleur verte ;
- une courbe 1002 représentant l'évolution temporelle de la tension aux bornes du condensateur C81, appelée tension VC81, en figure 10 la courbe fait partie du graphique (A) et est de couleur bleue ;
- une courbe 1003 représentant l'évolution temporelle de la tension de commande commune fournie par les circuits de commande CMD1 et CMD2 aux gâchettes des thyristors T1 et T2, appelée tension VT12, en figure 10 la courbe fait partie du graphique (A) et est de couleur jaune ;
- une courbe 1004 représentant l'évolution temporelle de la tension aux bornes du condensateur Cf3, c'est-à-dire de la tension entre les noeuds N2 et GND, en figure 10 la courbe fait partie du graphique (A) et est de couleur rouge ;
- une courbe 1005 représentant l'évolution temporelle de la tension d'alimentation VCC_CMD fournie par le circuit 800, c'est-à-dire la tension entre les noeuds OUT8 et N2, en figure 10 la courbe fait partie du graphique (B) et est de couleur verte ; et
- une courbe 1006 représentant l'évolution temporelle du courant ID81 traversant la diode D81 du circuit 800, par convention le courant ID81 est considéré positif lorsque le courant circule depuis l'anode vers la cathode de la diode D81, en figure 10 la courbe fait partie du graphique (B) et est de couleur rouge.

Avant un instant initial t100, le convertisseur 200 ne reçoit pas de tension VAC à convertir. Les tensions et courant dont l'évolution est représentée par les courbes 1001 à 1006 sont à un état de repos. Plus particulièrement, les tensions des courbes 1001 à 1005 ont toute une amplitude proche de 0 V, voir inférieure à 0 V, et le courant de la courbe 1006 a une amplitude de l'ordre de 0 A.

A partir de l'instant initial t100, et jusqu'à un instant t101, postérieur à l'instant t100, le convertisseur 200 commence à recevoir une tension alternative VAC à convertir et démarre. Pendant cette phase, les condensateurs Cf3 et C_BUS sont chargés en utilisant la tension alternative VAC à convertir traversant la résistance R1, et les diodes D1, D2, D3 et D4. Ainsi, à l'instant t101, la tension de la courbe 1004 a augmenté.

A l'instant t101, le circuit correcteur de facteur de puissance est démarré, le transistor M1 est rendu passant par sa tension de commande VG1. La tension VBUS de la courbe 1001 augmente jusqu'à un instant t102, postérieur à l'instant t101. La tension aux bornes du condensateur Cf3 devient alors périodique (voir courbe 1004).

A l'instant t102, ou, selon une variante à un instant t73, postérieur à l'instant t72, les transistors M2 et M3 sont rendus passant par leurs tensions de commande VG2 et VG3. Le condensateur C82 du circuit 800 commence à se charger en utilisant le courant circulant à travers le condensateur C81 du circuit 800.

A un instant t103, postérieur à l'instant t101, la tension VBUS est assez élevée pour alimenter le circuit 800 qui fournit alors une tension VCC_CMD (voir courbe 1005) assez élevée pour que la tension de commande commune de la courbe 1003 puisse commander les thyristors T1 et T2.

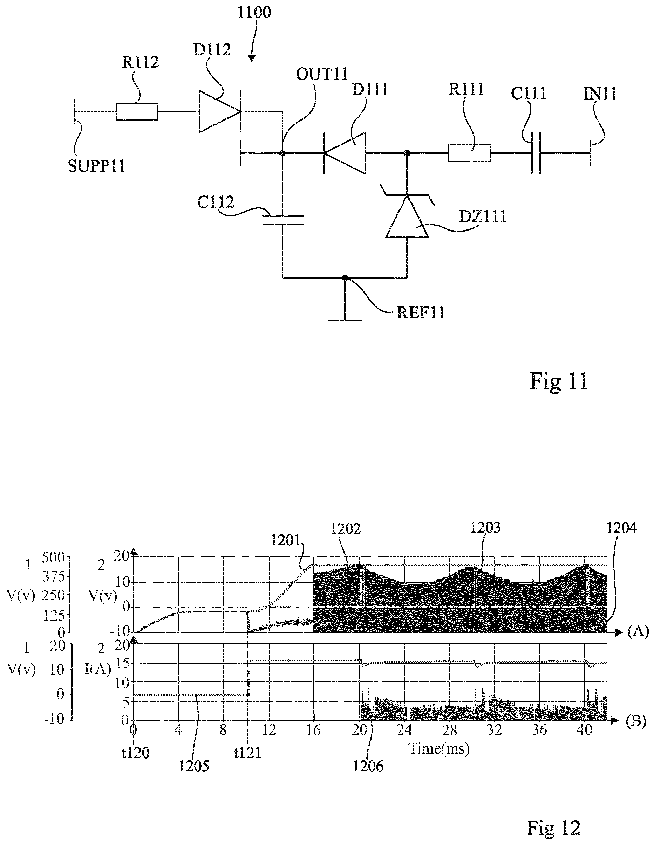

La figure 11 est un schéma électrique d'un deuxième exemple de réalisation d'un circuit 1100 adapté à convertir une tension interne d'un convertisseur en une tension d'alimentation. Le circuit 1100 est un exemple de circuit pouvant être utilisé comme circuit 203 dans un convertisseur du type du convertisseur 200 décrit en relation avec la figure 2.

Comme le circuit 203 décrit en relation avec la figure 2, le circuit 1100 reçoit sur un noeud d'entrée IN11 la tension interne VINT2, et fournit sur un noeud de sortie OUT11 la tension d'alimentation continue VCC_CMD configurée pour alimenter le ou les circuits de commande des thyristors T1 et T2 du convertisseur 200. Le circuit 500 comprend, en outre, un noeud de référence REF11 relié, de préférence connecté, au noeud N2 du convertisseur 200.

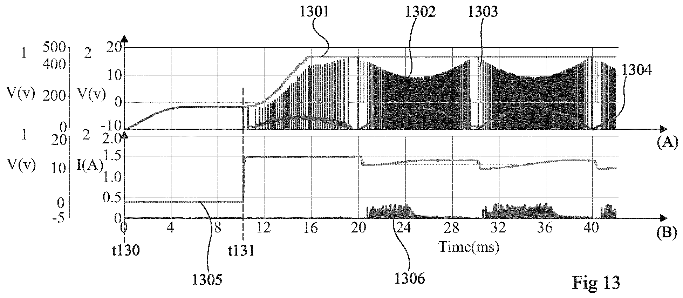

De plus, comme décrit précédemment, la tension interne VINT2 est une tension prise au niveau du premier étage de conversion 201 du convertisseur 200 de la figure 2. Selon un exemple, la tension VINT2 peut être prise au niveau du noeud N3, N4 ou N5, en étant référencé au noeud de référence GND du convertisseur 200. Le fonctionnement du cas où la tension VINT2 est prise au niveau du noeud N4 est décrit en relation avec la figure 12, et le fonctionnement du cas où la tension VINT2 est prise au niveau du noeud N3 est décrit en relation avec la figure 13.

Le circuit 1100 est un circuit d'alimentation capacitive comprenant une première branche comportant, en série entre les noeuds IN11 et OUT11, un condensateur C111, une résistance R111 et une diode D111. Plus particulièrement, une première électrode du condensateur C111 est reliée, de préférence connectée, au noeud IN11, et une deuxième électrode du condensateur C111 est reliée, de préférence connectée, à une première borne de la résistance R111. Une deuxième borne de la résistance R111 est reliée, de préférence connectée, à l'anode de la diode D111. La cathode de la diode D111 est reliée, de préférence connectée, au noeud OUT11.

Le circuit 1100 comprend, en outre, une diode Zener DZ111 dont la cathode est reliée, de préférence connectée, à l'anode de la diode D111, et dont l'anode est reliée, de préférence connectée, au noeud de référence REF11.

Pour finir, le circuit 500 comprend, en outre, un condensateur C112 dont une première électrode est reliée, de préférence connectée, au noeud de sortie OUT11, et dont une deuxième électrode est reliée, de préférence connectée, au noeud de référence REF11.

Le circuit 1100 comprend, en outre, une deuxième branche, ou circuit de précharge, comportant, en série entre un noeud SUPP11 et le noeud OUT11, une résistance R112 et une diode D112. Plus particulièrement, une première borne de la résistance R112 est reliée, de préférence connectée, au noeud SUPP11, et une deuxième borne de la résistance R112 est reliée, de préférence connectée, à la cathode de la diode D112. L'anode de la diode D112 est reliée, de préférence connectée, au noeud OUT11. Le noeud SUPP11 reçoit le potentiel d'alimentation continue VCC du convertisseur 200. La deuxième branche permet d'accélérer le démarrage du circuit 1100 par rapport au circuit 800.

La figure 12 comprend deux graphiques (A) et (B) permettant d'illustrer le fonctionnement d'un convertisseur 200 décrit en relation avec la figure 2 comprenant un circuit 1100 décrit en relation avec la figure 8 dans lequel la tension interne VINT2 correspond à la tension prise entre les noeuds N4 et GND du convertisseur 200.

Les graphiques (A) et (B) comprennent des courbes illustrant l'évolution de tensions et courant du convertisseur 200, parmi lesquelles :
- une courbe 1201 représentant l'évolution temporelle de la tension entre les noeuds N4 et GND, appelée tension VBUS, en figure 12 la courbe fait partie du graphique (A) et est de couleur verte ;
- une courbe 1202 représentant l'évolution temporelle de la tension aux bornes du condensateur C111, appelée tension VC111, en figure 12 la courbe fait partie du graphique (A) et est de couleur bleue ;
- une courbe 1203 représentant l'évolution temporelle de la tension de commande commune fournie par les circuits de commande CMD1 et CMD2 aux gâchettes des thyristors T1 et T2, appelée tension VT12, en figure 12 la courbe fait partie du graphique (A) et est de couleur jaune ;
- une courbe 1204 représentant l'évolution temporelle de la tension aux bornes du condensateur Cf3, c'est-à-dire de la tension entre les noeuds N2 et GND, en figure 12 la courbe fait partie du graphique (A) et est de couleur rouge ;
- une courbe 1205 représentant l'évolution temporelle de la tension d'alimentation VCC_CMD fournie par le circuit 1100, c'est-à-dire la tension entre les noeuds OUT11 et N2, en figure 12 la courbe fait partie du graphique (B) et est de couleur verte ; et
- une courbe 1206 représentant l'évolution temporelle du courant ID111 traversant la diode D111 du circuit 1110, par convention le courant ID111 est considéré positif lorsque le courant circule depuis l'anode vers la cathode de la diode D111, en figure 12 la courbe fait partie du graphique (B) et est de couleur rouge.

Avant un instant initial t120, le convertisseur 200 ne reçoit pas de tension VAC à convertir. Les tensions et courant dont l'évolution est représentée par les courbes 1201 à 1206 sont à un état de repos. Plus particulièrement, les tensions des courbes 1201 à 1205 ont toute une amplitude proche de 0 V, voir inférieure à 0 V, et le courant de la courbe 1206 a une amplitude de l'ordre de 0 A.

A partir de l'instant initial t120, et jusqu'à un instant t121, postérieur à l'instant t120, le convertisseur 200 commence à recevoir une tension alternative VAC à convertir et démarre. Pendant cette phase, les condensateurs Cf3 et C_BUS sont chargés en utilisant la tension alternative VAC à convertir traversant la résistance R1, et les diodes D1, D2, D3 et D4. Ainsi, à l'instant t121, la tension de la courbe 1204 a augmenté.

Entre les instants t120 et 121, le circuit fournissant la tension d'alimentation VCC est activé, et fournit au noeud SUPP11 une tension, référencée au noeud de référence GND du circuit convertisseur, dont l'amplitude est comprise entre 3 et 18 V.

A l'instant t121, le circuit correcteur de facteur de puissance est démarré, le transistor M1 est rendu passant par sa tension de commande VG1. La tension VBUS de la courbe 1201 augmente. La tension aux bornes du condensateur Cf3 devient alors périodique (voir courbe 1204).

De plus, à l'instant t121, le condensateur C112 du circuit 1200 commence à se charger en utilisant le courant fourni sur le noeud SUPP11, par la tension d'alimentation VCC, à travers la résistance R112 et la diode D112. De plus, la tension d'alimentation VCC peut, en outre, fournir un courant circulant à travers le transistor M1 lorsqu'il est à l'état passant.

A partir de l'instant t121, la tension VCC_CMD (voir courbe 1205) est assez élevée pour que la tension de commande commune de la courbe 1203 puisse commander les thyristors T1 et T2. Les deux thyristors T1 et T2 peuvent être commandés dès lors, mais en pratique, il peut être préférable d'attendre l'activation des transistors M2 et M3 afin de pouvoir recharger le condensateur C112 avec le courant délivré par le condensateur C111 lorsque l'étage de conversion 202 est activé, et qu'une tension alternative de relativement haute-fréquence est fournie entre les noeuds N5 et GND. On appelle haute fréquence ici une tension alternative ayant une fréquence supérieure à quelques kHz, en pratique de 10 à 100 kHz. Dans ce mode de réalisation identique au mode de réalisation décrit en relation avec la figure 10, la tension VINT2 est une tension à haute fréquence.

Un avantage du circuit 1100, par comparaison avec le circuit 800, est qu'il permet d'accélérer le démarrage du convertisseur 200.

La figure 13 comprend deux graphiques (A) et (B) permettant d'illustrer le fonctionnement d'un convertisseur 200 décrit en relation avec la figure 2 comprenant un circuit 1100 décrit en relation avec la figure 11 dans lequel la tension interne VINT2 correspond à la tension prise entre les noeuds N3 et GND du convertisseur 200.

Les graphiques (A) et (B) comprennent des courbes illustrant l'évolution temporelle de tensions et courant du convertisseur 200, parmi lesquelles :
- une courbe 1301 représentant l'évolution temporelle de la tension entre les noeuds N4 et GND, appelée tension VBUS, en figure 13 la courbe fait partie du graphique (A) et est de couleur verte ;
- une courbe 1302 représentant l'évolution temporelle de la tension aux bornes du condensateur C111, appelée tension VC111, en figure 13 la courbe fait partie du graphique (A) et est de couleur bleue ;
- une courbe 1303 représentant l'évolution temporelle de la tension de commande commune fournie par les circuits de commande CMD1 et CMD2 aux gâchettes des thyristors T1 et T2, appelée tension VT12, en figure 13 la courbe fait partie du graphique (A) et est de couleur jaune ;
- une courbe 1304 représentant l'évolution temporelle de la tension aux bornes du condensateur Cf3, c'est-à-dire de la tension entre les noeuds N2 et GND, en figure 13 la courbe fait partie du graphique (A) et est de couleur rouge ;
- une courbe 1305 représentant l'évolution temporelle de la tension d'alimentation VCC_CMD fournie par le circuit 1100, c'est-à-dire la tension entre les noeuds OUT11 et N2, en figure 13 la courbe fait partie du graphique (B) et est de couleur verte ; et
- une courbe 1306 représentant l'évolution temporelle du courant ID111 traversant la diode D111 du circuit 1100, par convention le courant ID111 est considéré positif lorsque le courant circule depuis l'anode vers la cathode de la diode D111, en figure 13 la courbe fait partie du graphique (B) et est de couleur rouge.

Avant un instant initial t130, le convertisseur 200 ne reçoit pas de tension VAC à convertir. Les tensions et courant dont l'évolution est représentée par les courbes 1301 à 1306 sont à un état de repos. Plus particulièrement, les tensions des courbes 1301 à 1305 ont toute une amplitude proche de 0 V, voir inférieure à 0 V, et le courant de la courbe 1306 a une amplitude de l'ordre de 0 A.

A partir de l'instant initial t130, et jusqu'à un instant t131, postérieur à l'instant t130, le convertisseur 200 commence à recevoir une tension alternative VAC à convertir et démarre. Pendant cette phase, les condensateurs Cf3 et C_BUS sont chargés en utilisant la tension alternative VAC à convertir traversant les diodes D1 et D2. Ainsi, à l'instant t131, la tension de la courbe 1304 a augmenté.

A l'instant t131, le circuit correcteur de facteur de puissance est démarré, le transistor M1 est rendu passant par sa tension de commande VG1. La tension VBUS de la courbe 1301 augmente. La tension aux bornes du condensateur Cf3 devient alors périodique (voir courbe 1304).

De plus, à l'instant t131, le condensateur C112 du circuit 1300 commence à se charger en utilisant le courant fourni par la résistance R112 et la diode D112.

A partir de l'instant t131, la tension VCC_CMD (voir courbe 1305) est assez élevée pour que la tension de commande commune de la courbe 1303 puisse commander les thyristors T1 et T2. Les deux thyristors T1 et T2 peuvent être commandés dès lors, mais en pratique, il peut être préférable d'attendre l'activation des transistors M2 et M3 afin de pouvoir recharger le condensateur C112 avec le courant délivré par le condensateur C111 lorsque l'étage de conversion 202 est activé, et qu'une tension alternative de relativement haute-fréquence est fournie entre les noeuds N5 et GND. Dans ce mode de réalisation identique au mode de réalisation d'écrit en relation avec la figure 10, la tension VINT2 est une tension à haute fréquence.

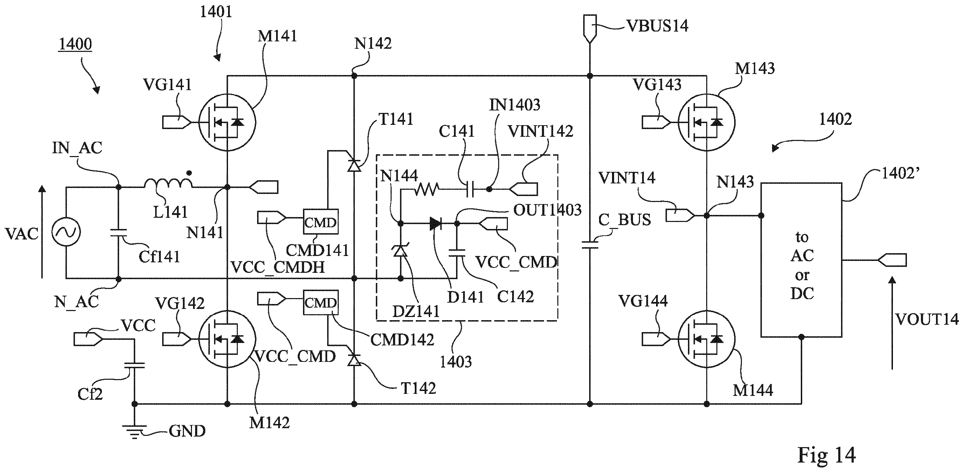

La figure 14 est un deuxième exemple de réalisation d'un convertisseur de tension 1400 du type du convertisseur de tension 100 décrit en relation avec la figure 1. Plus particulièrement, la figure 14 est un schéma électrique, partiellement sous forme de blocs, du convertisseur de tension 1400.

Comme le convertisseur de tension 100 de la figure 1, le convertisseur 1400 comprend :
- un premier étage de conversion 1401 ;
- un deuxième étage de conversion 1402, représenté sous forme de bloc ; et
- un circuit 1403 adapté à convertir une tension interne du premier étage de conversion 1401 en une tension d'alimentation VCC_CMD.

Comme décrit en relation avec la figure 1, le premier étage de conversion 1401 reçoit la tension d'entrée alternative VAC et fournit en sortie une tension intermédiaire VBUS14. Le deuxième étage de conversion 1402 reçoit la tension intermédiaire VBUS14 et fournit en sortie la tension de sortie VOUT14. Le circuit 1403 reçoit une tension interne VINT142 de l'étage de conversion 1401 pour fournir en sortie une tension d'alimentation VCC_CMD.

Le premier étage de conversion 1401 comprend deux noeuds d'entrée IN_AC et N_AC recevant la tension d'entrée alternative VAC.

L'étage 1401 comprend, en outre, un circuit correcteur de facteur de puissance comportant une inductance L141 et deux transistors MOS de type N M141 et M142. Une première borne de l'inductance L141, ou borne d'entrée de l'inductance L141, est reliée, de préférence connectée, au noeud IN_AC, et une deuxième borne de l'inductance L141, ou borne de sortie de l'inductance L141, est reliée, de préférence connectée, à un noeud N141. La source du transistor M141 est reliée, de préférence connectée, à un noeud N141, et le drain du transistor M141 est relié, de préférence connecté, à un noeud N142. La grille du transistor M2 reçoit un potentiel de commande VG141. La source du transistor M142 est reliée, de préférence connectée, à un noeud N141, et le drain du transistor M142 est relié, de préférence connecté, à un noeud GND recevant un potentiel de référence, par exemple la masse. La grille du transistor M142 reçoit un potentiel de commande VG142.

L'étage 1401 comprend, en outre, deux thyristors T141 et T142 et leurs circuits de commande respectifs CMD141 (CMD) et CMD142 (CMD). Le thyristor T141 a sa cathode reliée, de préférence connectée, à un noeud N142, et son anode reliée, de préférence connectée, au noeud N_AC. La gâchette du thyristor T141 est reliée, de préférence connectée, à une sortie du circuit de commande CMD141. Le circuit de commande CMD141 est alimenté par la tension VCC_CMDH fournie par un circuit non représenté en figure 14. Le thyristor T142 a sa cathode reliée, de préférence connectée, à un noeud N_AC, et son anode reliée, de préférence connectée, au noeud GND. La gâchette du thyristor T142 est reliée, de préférence connectée, à une sortie du circuit de commande CMD142. Le circuit de commande CMD142 est alimenté par la tension VCC_CMD fournie par le circuit 1403. Des exemples plus détaillés des circuits de commande CMD141 et CMD142 sont décrits en relation avec les figures 3 et 4.

Le premier étage de conversion 201 comprend, en outre, un condensateur C_BUS placé entre les noeuds N142 et GND, mais comprend aussi, de façon optionnelle, un ou plusieurs condensateurs de filtrage parmi lesquels :
- un condensateur Cf141 placé entre les noeuds IN_AC et N_AC ; et
- un condensateur Cf2 placé entre le noeud GND et un noeud recevant un potentiel d'alimentation continue VCC du convertisseur 1400.

La tension aux bornes du condensateur C_BUS est noté VBUS14 et correspond à la tension intermédiaire VINT décrite en relation avec la figure 1.

Le deuxième étage de conversion 1402 est du type du deuxième étage de conversion 202 du convertisseur 200 décrit en relation avec la figure 2.

Le deuxième étage 1402 comprend un circuit de découpage comportant deux transistors M143 et M144. Les transistors M143 et M144 sont des transistors MOS de type N. La source du transistor M143 est reliée, de préférence connectée, à un noeud N143, et le drain du transistor M143 est relié, de préférence connecté, au noeud N142. La grille du transistor M143 reçoit un potentiel de commande VG143. La source du transistor M144 est reliée, de préférence connectée, au noeud GND, et le drain du transistor M144 est relié, de préférence connecté, au noeud N143. La grille du transistor M144 reçoit un potentiel de commande VG144.

La suite du deuxième étage 1402 est représenté sous forme d'un bloc 1402' (to AC or DC).

Le circuit 1403 reçoit, sur un noeud d'entrée IN1403, la tension interne VINT142, et fournit, sur un noeud de sortie OUT1403, la tension VCC_CMD. Le circuit 1403 est, en outre, reliée, de préférence connectée, au noeud d'entrée N_AC du convertisseur 1400.

Le circuit 1403 comprend, entre le noeud d'entrée IN1403 et le noeud N_AC, un condensateur C141, une résistance R141, et une diode Zener DZ141. Plus particulièrement, une première électrode du condensateur C141 est reliée, de préférence connectée, au noeud IN1403, et une deuxième électrode du condensateur C141 est reliée, de préférence connectée, à une première borne de la résistance R141. La deuxième borne de la résistance R141 est reliée, de préférence connectée, à un noeud N144. L'anode de la diode DZ141 est reliée, de préférence connectée, au noeud N_AC, et la cathode de la diode DZ141 est reliée, de préférence connectée, au noeud N144.

Le circuit 1403 comprend, en outre, une diode D141 entre le noeud OUT1403 et le noeud N144. Plus particulièrement, l'anode de la diode D141 est reliée, de préférence connectée, au noeud N144, et la cathode de la diode D141 est reliée, de préférence connectée, au noeud de sortie OUT1403.

Le circuit 1403 comprend, en outre, un condensateur C142 entre le noeud OUT1403 et le noeud N_AC. Plus particulièrement, une première électrode du condensateur C142 est reliée, de préférence connectée, au noeud OUT1403, et une deuxième électrode du condensateur C142 est reliée, de préférence connectée, au noeud N_AC.

Le convertisseur 1400 fonctionne sur le même principe que le convertisseur 200 décrit en relation avec la figure 2. Le circuit 1403 utilise la composante alternative de la tension interne VINT142 pour fournir la tension d'alimentation continue VCC_CMD aux circuits de commande CMD141 et CMD142 des thyristors T141 et T142. Dans le cas du convertisseur 1400, la tension interne VINT142 peut être la tension entre les noeuds N142 et GND ou la tension entre les noeuds N143 et GND.

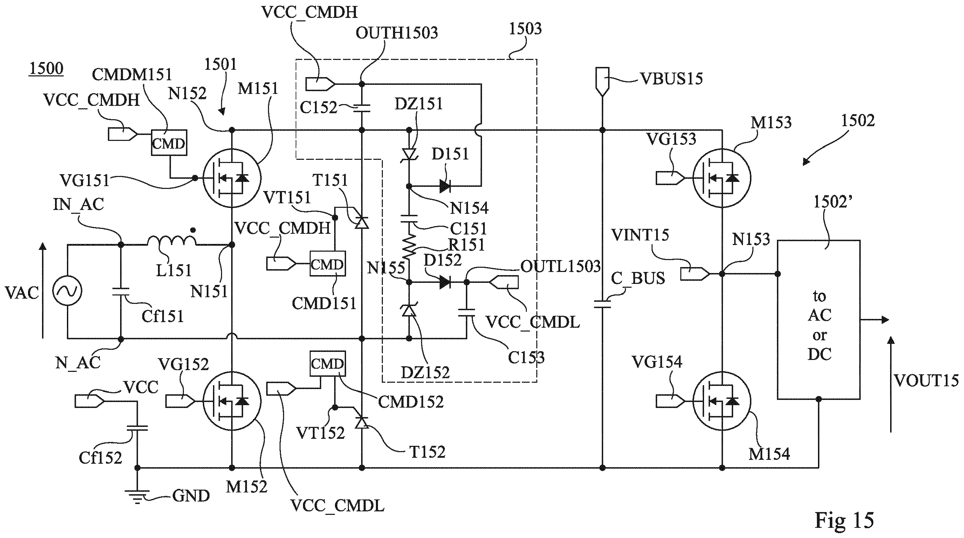

La figure 15 est un troisième exemple de réalisation d'un convertisseur de tension 1500 du type du convertisseur de tension 100 décrit en relation avec la figure 1. Plus particulièrement, la figure 15 est un schéma électrique, partiellement sous forme de blocs, du convertisseur de tension 1500.

Comme le convertisseur de tension 100 de la figure 1, le convertisseur 1500 comprend :
- un premier étage de conversion 1501 ;
- un deuxième étage de conversion 1502, représenté sous forme de bloc ; et
- un circuit 1503 adapté à convertir une tension interne VINT15 du premier étage de conversion 1501 en une tension d'alimentation.

Comme décrit en relation avec la figure 1, le premier étage de conversion 1501 reçoit la tension d'entrée alternative VAC et fournit en sortie une tension intermédiaire VBUS15. Le deuxième étage de conversion 1502 reçoit la tension intermédiaire VBUS15 et le potentiel de référence du noeud GND, et fournit en sortie la tension de sortie VOUT15. Le circuit 1503 reçoit une autre tension interne VBUS15 de l'étage de conversion 1501 pour fournir en sortie deux tensions d'alimentation VCC_CMDL et VCC_CMDH.

Le premier étage de conversion 1501 comprend deux noeuds d'entrée IN_AC et N_AC recevant la tension d'entrée alternative VAC.

L'étage 1501 comprend, en outre, un circuit correcteur de facteur de puissance comportant une inductance L151 et deux transistors MOS de type N M151 et M152. Une première borne de l'inductance L151, ou borne d'entrée de l'inductance L151, est reliée, de préférence connectée, au noeud IN_AC, et une deuxième borne de l'inductance L151, ou borne de sortie de l'inductance L151, est reliée, de préférence connectée, à un noeud N151. La source du transistor M151 est reliée, de préférence connectée, à un noeud N151, et le drain du transistor M151 est relié, de préférence connecté, à un noeud N152. La grille du transistor M151 reçoit un potentiel de commande VG151. Selon un exemple, le potentiel de commande VG151 est fourni par un circuit de commande CMDM151 (CMD) recevant la tension d'alimentation VCC_CMDH. La source du transistor M152 est reliée, de préférence connectée, à un noeud N151, et le drain du transistor M152 est relié, de préférence connecté, à un noeud GND recevant un potentiel de référence, par exemple la masse. La grille du transistor M152 reçoit un potentiel de commande VG152.

L'étage 1501 comprend, en outre, deux thyristors T151 et T152 et leurs circuits de commande respectifs CMD151 (CMD) et CMD152 (CMD). Le thyristor T151 a sa cathode reliée, de préférence connectée, à un noeud N152, et son anode reliée, de préférence connectée, au noeud N_AC. La gâchette du thyristor T151 est reliée, de préférence connectée, à une sortie du circuit de commande CMD151. Le circuit de commande CMD151 est alimenté par la tension VCC_CMDH fournie par le circuit 1503. Le thyristor T152 a sa cathode reliée, de préférence connectée, à un noeud N_AC, et son anode reliée, de préférence connectée, au noeud GND. La gâchette du thyristor T152 est reliée, de préférence connectée, à une sortie du circuit de commande CMD152. Le circuit de commande CMD152 est alimenté par la tension VCC_CMDL fournie par le circuit 1503. Des exemples plus détaillés des circuits de commande CMD151 et CMD152 sont décrits en relation avec les figures 3 et 4.

Le premier étage de conversion 1501 comprend, en outre, un condensateur C_BUS placé entre les noeuds N152 et GND, mais comprend aussi, de façon optionnelle, un ou plusieurs condensateurs de filtrage parmi lesquels :
- un condensateur Cf151 placé entre les noeuds IN_AC et N_AC ; et
- un condensateur Cf152 placé entre le noeud GND et un noeud recevant un potentiel d'alimentation continue VCC du convertisseur 1500.

La tension aux bornes du condensateur C_BUS est noté VBUS15 et correspond à la tension intermédiaire VINT décrite en relation avec la figure 1.

Le deuxième étage de conversion 1502 est du type du deuxième étage de conversion 202 du convertisseur 200 décrit en relation avec la figure 2.

Ce deuxième étage comprend, en outre, un étage de découpage comportant deux transistors M153 et M154. Les transistors M153 et M154 sont des transistors MOS de type N. La source du transistor M153 est reliée, de préférence connectée, à un noeud N153, et le drain du transistor M153 est relié, de préférence connecté, au noeud N152. La grille du transistor M153 reçoit un potentiel de commande VG153. La source du transistor M154 est reliée, de préférence connectée, au noeud GND, et le drain du transistor M154 est relié, de préférence connecté, au noeud N153. La grille du transistor M154 reçoit un potentiel de commande VG154.

La suite du deuxième étage 1502 est représenté par un bloc 1502' (to AC or DC).

Le circuit 1503 comprend un noeud d'entrée relié, de préférence connecté, au noeud N152 du convertisseur 1500 et fournit, sur un premier noeud de sortie OUTH1503, la tension d'alimentation VCC_CMDH, et, sur un deuxième noeud de sortie OUTL1503, la tension d'alimentation VCC_CMDL. Le circuit 1503 est, en outre, reliée, de préférence connectée, au noeud d'entrée N_AC du convertisseur 1500.

Le circuit 1503 comprend, entre le noeud N152 et le noeud N_AC, une diode Zener DZ151, un condensateur C151, une résistance R151, et une diode Zener DZ152. Plus particulièrement, l'anode de la diode Zener DZ151 est reliée, de préférence connectée, au noeud N152, et la cathode de la diode DZ151 est reliée, de préférence connectée, à un noeud N154. Une première électrode du condensateur C151 est reliée, de préférence connectée, au noeud N154, et une deuxième électrode du condensateur C152 est reliée, de préférence connectée, à une première borne de la résistance R151. Une deuxième borne de la résistance R151 est reliée, de préférence connectée, à un noeud N155. La cathode de la diode Zener DZ152 est reliée, de préférence connectée, au noeud N155, et l'anode de la diode DZ152 est reliée, de préférence connectée, au noeud N_AC.

Le convertisseur 1500 comprend, en outre, un condensateur C152 et une diode D151. Plus particulièrement, une première électrode du condensateur C152 est reliée, de préférence connectée, au noeud OUTH1503, et une deuxième électrode du condensateur C152 est reliée, de préférence connectée, au noeud N152. La cathode de la diode D151 est reliée, de préférence connectée, au noeud OUTH1503, et l'anode de la diode D151 est reliée, de préférence connectée, au noeud N154.

Le convertisseur 1500 comprend, en outre, un condensateur C153 et une diode D152. Plus particulièrement, une première électrode du condensateur C153 est reliée, de préférence connectée, au noeud OUTL1503, et une deuxième électrode du condensateur C153 est reliée, de préférence connectée, au noeud N_AC. La cathode de la diode D152 est reliée, de préférence connectée, au noeud OUTL1503, et l'anode de la diode D152 est reliée, de préférence connectée, au noeud N_AC.

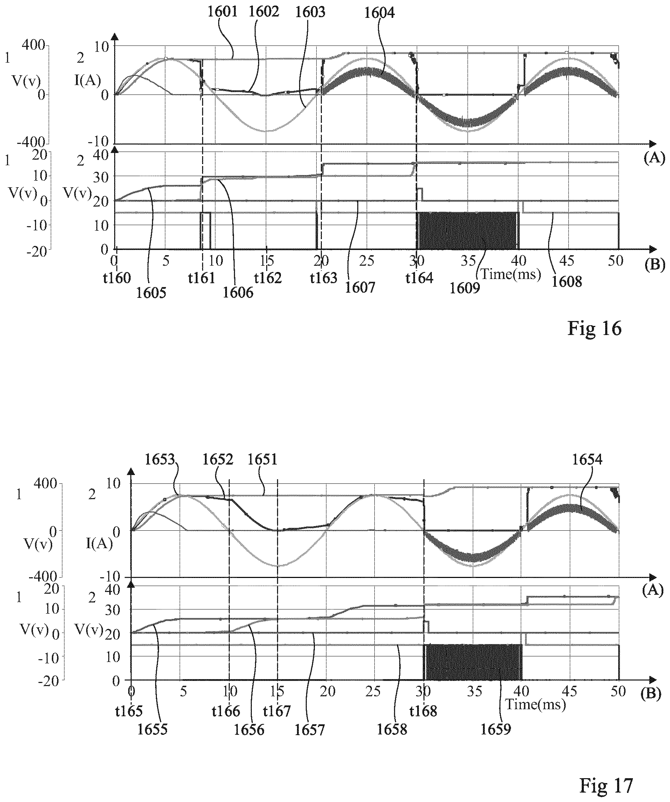

Deux modes de fonctionnement du convertisseur 1500 sont décrits en relation avec les figures 16 et 17.

La figure 16 comprend deux graphiques (A) et (B) permettant d'illustrer un premier mode de fonctionnement du convertisseur 1500 décrit en relation avec la figure 15.

Les graphiques (A) et (B) comprennent des courbes illustrant l'évolution temporelle de tensions et courant du convertisseur 1500, parmi lesquelles :
- une courbe 1601 représentant l'évolution temporelle de la tension entre les noeuds N152 et GND, appelée tension VBUS15, en figure 16 la courbe fait partie du graphique (A) et est de couleur verte ;
- une courbe 1602 représentant l'évolution temporelle de la tension entre les noeuds N152 et N_AC, en figure 16 la courbe fait partie du graphique (A) et est de couleur bleue ;
- une courbe 1603 représentant l'évolution temporelle de la tension alternative d'entrée VAC appliquée entre les noeuds IN_AC et N_AC, en figure 16 la courbe fait partie du graphique (A) et est de couleur jaune ;
- une courbe 1604 représentant l'évolution temporelle du courant traversant l'inductance L151, en figure 16 la courbe fait partie du graphique (A) et est de couleur rouge ;
- une courbe 1605 représentant l'évolution temporelle de la tension d'alimentation VCC_CMDL fournie par le circuit 1503, c'est-à-dire la tension entre les noeuds OUTL1403 et N_AC, en figure 16 la courbe fait partie du graphique (B) et est de couleur verte ;
- une courbe 1606 représentant l'évolution temporelle de la tension d'alimentation VCC_CMDH fournie par le circuit 1503, c'est-à-dire la tension entre les noeuds OUTH1403 et N152, en figure 16 la courbe fait partie du graphique (B) et est de couleur rouge ;
- une courbe 1607 représentant l'évolution temporelle de la tension de commande VT151 fournie au thyristor T151 par le circuit de commande CMD151, en figure 16 la courbe fait partie du graphique (B) et est de couleur rouge ;
- une courbe 1608 représentant l'évolution temporelle de la tension de commande VT152 fournie au thyristor T152 par le circuit de commande CMD152, en figure 16 la courbe fait partie du graphique (B) et est de couleur verte ; et
- une courbe 1609 représentant l'évolution temporelle de la tension entre la grille et la source du transistor M151, c'est-à-dire la tension entre les noeuds VG151 et N151, en figure 17 la courbe fait partie du graphique (B) et est de couleur bleue.

Avant un instant initial t160, le convertisseur 200 ne reçoit pas de tension alternative VAC à convertir. Les tensions et courant dont l'évolution est représentée par les courbes 1601 et 1602 et 1604 à 1609 sont à un état de repos. Plus particulièrement, les tensions des courbes 1601, 1602, 1606 à 1608 ont toute une amplitude proche de 0 V, voir inférieure à 0 V, et le courant de la courbe 1604 a une amplitude de l'ordre de 0 A.

A partir de l'instant initial t160, et jusqu'à un instant t161, postérieur à l'instant t160, le convertisseur 1500 commence à recevoir la tension alternative VAC à convertir et démarre. Pendant cette phase, et selon un exemple, l'amplitude de la tension AC est positive et présente un front montant, le condensateur C153 est chargé en utilisant la tension entre les noeuds N152 et N_AC (courbe 1602) qui croit en même temps que la tension alternative VAC. De plus, à l'instant t161, le transistor M151 est rendu volontairement passant un court instant (alors que le circuit de correction de facteur de puissance ne démarrera proprement dit qu'à un instant t163 ultérieur), par le signal VG151, et le circuit correcteur de facteur de puissance est démarré. La tension entre les potentiels VBUS15 et N_AC (courbe 1602) présente un front descendant et oscille légèrement. A l'instant t161, la tension VBUS15 de la courbe 1601 a augmenté.

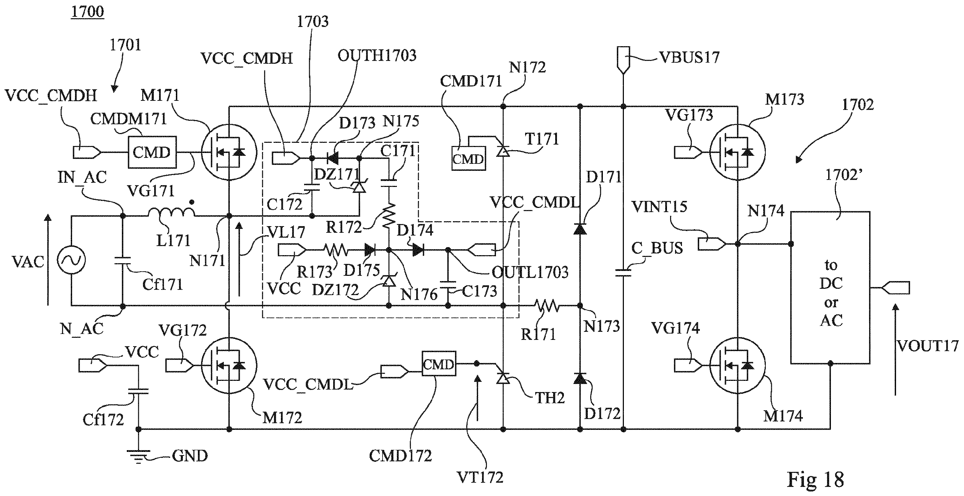

De plus, et selon une variante, le convertisseur 1500 peut comprendre, en outre, un circuit de précharge, comme celui décrit en relation avec la figure 18 (avec les composants R171, D171 et D172), qui permet à partir de cet instant initial t160 de charger le condensateur C_BUS.

Ainsi, à l'instant t161, la tension VBUS15 de la courbe 1601 a augmenté et le condensateur C153 est chargé. L'amplitude de la tension VCC_CMDL (courbe 1605) est à un premier palier.

A partir d'un instant t162, postérieur à l'instant t161, l'amplitude de la tension alternative VAC est négative et présente, à nouveau, un front montant, le condensateur C153 est alors en cours de charge (même si cette charge est très faible et se note que très légèrement sur la courbe 1605) .

A un instant t163, postérieur à l'instant t162, la tension de la courbe 1602 présente un front montant franc qui charge significativement C153. L'amplitude de la tension VCC_CMDL (courbe 1605) augmente alors pour arriver à un nouveau palier plus élevé que le premier atteint à l'instant t161.

De manière équivalente, aux instants t161 et t163, les fronts descendants de la tension entre les noeuds VBUS15 et N_AC appliquent un courant circulant depuis la diode DZ152, le condensateur C151, la résistance R151 et la diode D151 vers le condensateur C152 qui se charge. L'amplitude de la tension VCC_CMDH augmente pour atteindre un deuxième palier à l'instant t163, plus élevé que le premier palier, par exemple du même ordre que le deuxième palier de la tension VCC_CMDL.

Il est à noter que dans le fonctionnement décrit précédemment, le front descendant de la tension entre les noeuds N152 et N_AC à l'instant t161 est provoqué volontairement afin de charger le condensateur C152.

Ainsi, à un instant t164 ou même dès l'instant t163, les tensions VCC_CMDH et VCC_CMDL sont assez élevées pour alimenter les circuits de commande des thyristors T1 et T2.

La figure 17 comprend deux graphiques (A) et (B) permettant d'illustrer un deuxième mode de fonctionnement du convertisseur 1500 décrit en relation avec la figure 15.

Les graphiques (A) et (B) comprennent des courbes illustrant l'évolution temporelle de tensions et courant du convertisseur 1500, parmi lesquelles :
- une courbe 1651 représentant l'évolution temporelle de la tension entre les noeuds N152 et GND, appelée tension VBUS15, en figure 17 la courbe fait partie du graphique (A) et est de couleur verte ;
- une courbe 1652 représentant l'évolution temporelle de la tension entre les noeuds N152 et N_AC, en figure 17 la courbe fait partie du graphique (A) et est de couleur bleue ;
- une courbe 1653 représentant l'évolution temporelle de la tension alternative d'entrée VAC appliquée entre les noeuds IN_AC et N_AC, en figure 17 la courbe fait partie du graphique (A) et est de couleur jaune ;
- une courbe 1654 représentant l'évolution temporelle du courant traversant l'inductance L151, en figure 17 la courbe fait partie du graphique (A) et est de couleur rouge ;
- une courbe 1655 représentant l'évolution temporelle de la tension d'alimentation VCC_CMDL fournie par le circuit 1503, c'est-à-dire la tension entre les noeuds OUTL1403 et N_AC, en figure 17 la courbe fait partie du graphique (B) et est de couleur verte ;
- une courbe 1656 représentant l'évolution temporelle de la tension d'alimentation VCC_CMDH fournie par le circuit 1503, c'est-à-dire la tension entre les noeuds OUTH1403 et N152, en figure 17 la courbe fait partie du graphique (B) et est de couleur rouge ;
- une courbe 1657 représentant l'évolution temporelle de la tension de commande VT151 fournie au thyristor T151 par le circuit de commande CMD151, en figure 17 la courbe fait partie du graphique (B) et est de couleur rouge ;
- une courbe 1658 représentant l'évolution temporelle de la tension de commande VT152 fournie au thyristor T152 par le circuit de commande CMD152, en figure 17 la courbe fait partie du graphique (B) et est de couleur verte ; et
- une courbe 1659 représentant l'évolution temporelle de la tension entre la grille et la source du transistor M151, c'est-à-dire la tension entre les noeuds N152 et N151, en figure 17 la courbe fait partie du graphique (B) et est de couleur bleue.

Avant un instant initial t165, le convertisseur 200 ne reçoit pas de tension alternative VAC à convertir. Les tensions et courant dont l'évolution est représentée par les courbes 1651 et 1652 et 1654 à 1659 sont à un état de repos. Plus particulièrement, les tensions des courbes 1651, 1652, 1656 à 1659 ont toute une amplitude proche de 0 V et le courant de la courbe 1654 a une amplitude de l'ordre de 0 A.

A partir de l'instant initial t165, et jusqu'à un instant t166, postérieur à l'instant t165, le convertisseur 1500 commence à recevoir la tension alternative VAC à convertir et démarre. Pendant cette phase, et selon un exemple, l'amplitude de la tension AC est positive et présente un front montant, le condensateur C153 est chargé en utilisant la tension entre les noeuds N152 et N_AC (courbe 1652) qui croit en même temps que la tension alternative VAC. Ainsi, à l'instant t161, la tension VBUS15 de la courbe 1651 a augmenté.

Le condensateur C153 est chargé. L'amplitude de la tension VCC_CMDL (courbe 1655) est à un premier palier.

A partir d'un instant t167, postérieur à l'instant t166, l'amplitude de la tension entre les noeuds N152 et N_AC présente, à nouveau, un front montant, le condensateur C153 est alors en cours de charge, et l'amplitude de la tension VCC_CMDH augmente pour arriver à un premier palier.

A un instant t168, postérieur à l'instant t167, correspondant au démarrage du circuit de correction de facteur de puissance, et en particulier à l'amorçage du transistor M151, l'amplitude de la tension entre les noeuds N152 et N_AC devient décroissante. Le condensateur C152 est chargé, et l'amplitude de la tension VCC_CMDH augmente pour atteindre un deuxième palier, plus élevé que le premier palier.

Ainsi, à l'un instant t169, les tensions VCC_CMDH et VCC_CMDL sont assez élevées pour alimenter les circuits de commande des thyristors T1 et T2.

La figure 18 est un quatrième exemple de réalisation d'un convertisseur de tension 1700 du type du convertisseur de tension 100 décrit en relation avec la figure 1. Plus particulièrement, la figure 18 est un schéma électrique, partiellement sous forme de blocs, du convertisseur de tension 1700.

Comme le convertisseur de tension 100 de la figure 1, le convertisseur 1700 comprend :
- un premier étage de conversion 1701 ;
- un deuxième étage de conversion 1702 (to DC or AC), représenté sous forme de bloc ; et
- un circuit 1703 adapté à convertir une potentiel interne VINT17 du premier étage de conversion 1701 en une tension d'alimentation.

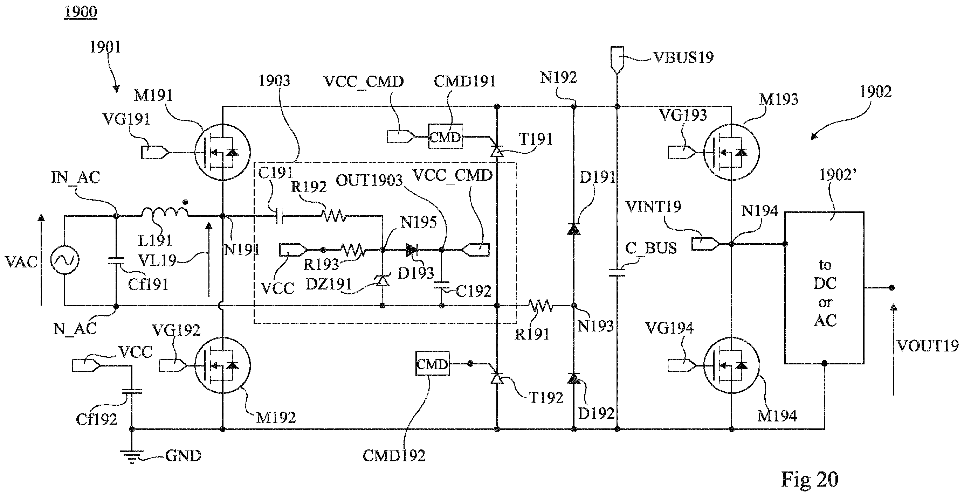

Comme décrit en relation avec la figure 1, le premier étage de conversion 1701 reçoit la tension d'entrée alternative VAC et fournit en sortie une tension intermédiaire VBUS17. Le deuxième étage de conversion 1702 reçoit la tension intermédiaire VBUS17 et le potentiel de référence du noeud GND, et fournit en sortie la tension de sortie VOUT17. Le circuit 1703 reçoit une autre potentiel interne VL17 de l'étage de conversion 1701 pour fournir en sortie deux tensions d'alimentation VCC_CMDL et VCC_CMDH. Une variante du convertisseur 1700 dans lequel le circuit 1703 ne fournit qu'une seule tension d'alimentation est décrit en relation avec la figure 20.

Le premier étage de conversion 1701 comprend deux noeuds d'entrée IN_AC et N_AC recevant la tension d'entrée alternative VAC.

L'étage 1701 comprend, en outre, un circuit correcteur de facteur de puissance comportant une inductance L171 et deux transistors MOS de type N M171 et M172. Une première borne de l'inductance L171, ou borne d'entrée de l'inductance L171, est reliée, de préférence connectée, au noeud IN_AC, et une deuxième borne de l'inductance L171, ou borne de sortie de l'inductance L171, est reliée, de préférence connectée, à un noeud N171. La source du transistor M171 est reliée, de préférence connectée, à un noeud N171, et le drain du transistor M171 est relié, de préférence connecté, à un noeud N172. La grille du transistor M171 reçoit un potentiel de commande VG171. Selon un exemple, le potentiel de commande VG171 est fourni par un circuit de commande CMDM171 (CMD) recevant la tension d'alimentation VCC_CMDH. Ce circuit est alimenté, de façon optionnelle, par la tension VCC_CMDH. La source du transistor M172 est reliée, de préférence connectée, à un noeud N171, et le drain du transistor M172 est relié, de préférence connecté, à un noeud GND recevant un potentiel de référence, par exemple la masse. La grille du transistor M172 reçoit un potentiel de commande VG172.

La tension VL17 correspond à la tension entre les noeuds N171 et N_AC.

L'étage 1701 comprend, en outre, deux thyristors T171 et T172 et leurs circuits de commande respectifs CMD171 (CMD) et CMD172 (CMD). Le thyristor T171 a sa cathode reliée, de préférence connectée, à un noeud N172, et son anode reliée, de préférence connectée, au noeud N_AC. La gâchette du thyristor T171 est reliée, de préférence connectée, à une sortie du circuit de commande CMD171. Le circuit de commande CMD171 est alimenté par une tension non représentée en figure 18. Le thyristor T172 a sa cathode reliée, de préférence connectée, à un noeud N_AC, et son anode reliée, de préférence connectée, au noeud GND. La gâchette du thyristor T172 est reliée, de préférence connectée, à une sortie du circuit de commande CMD172. Le circuit de commande CMD172 est alimenté par la tension VCC_CMDL fournie par le circuit 1703. Des exemples plus détaillés des circuits de commande CMD171 et CMD172 sont décrits en relation avec les figures 3 et 4.

Le premier étage de conversion 1701 comprend, en outre, un condensateur C_BUS placé entre les noeuds N172 et GND, mais comprend aussi, de façon optionnelle, un ou plusieurs condensateurs de filtrage parmi lesquels :
- un condensateur Cf171 placé entre les noeuds IN_AC et N_AC ; et
- un condensateur Cf172 placé entre le noeud GND et un noeud recevant un potentiel d'alimentation continue VCC du convertisseur 1700.

La tension aux bornes du condensateur C_BUS est noté VBUS17.

Le premier étage comprend, en outre, un circuit de précharge, optionnel, composé de deux diodes D171 et D172 placées en série entre les noeuds N172 et GND, et d'une résistance R171. Plus particulièrement, la cathode de la diode D171 est reliée, de préférence connectée, au noeud N172, et l'anode de la diode D171 est reliée, de préférence connectée, à un noeud N173. La cathode de la diode D172 est reliée, de préférence connectée, au noeud N173, et l'anode de la diode D171 est reliée, de préférence connectée, au noeud GND. Une première borne de la résistance R171 est reliée, de préférence connectée, au noeud N_AC et une deuxième borne de la résistance R171 est reliée, de préférence connectée, au noeud N173.

Le deuxième étage de conversion 1702 est du type du deuxième étage de conversion 202 du convertisseur 200 décrit en relation avec la figure 2.

Le deuxième étage 1702 comprend un étage de découpage comportant deux transistors M173 et M174. Les transistors M173 et M174 sont des transistors MOS de type N. La source du transistor M173 est reliée, de préférence connectée, à un noeud N174, et le drain du transistor M173 est relié, de préférence connecté, au noeud N172. La grille du transistor M173 reçoit un potentiel de commande VG173. La source du transistor M174 est reliée, de préférence connectée, au noeud GND, et le drain du transistor M174 est relié, de préférence connecté, au noeud N174. La grille du transistor M174 reçoit un potentiel de commande VG174. La tension intermédiaire VBUS17 fournie par l'étage 1701 est la différence de potentiel entre les noeuds N174 et GND.

La suite du deuxième étage 1702 est représentée par un bloc 1702' (to DC or AC).

Le circuit 1703 comprend un noeud d'entrée relié, de préférence connecté, au noeud N171 du convertisseur 1700 et fournit, sur un premier noeud de sortie OUTH1703, la tension d'alimentation VCC_CMDH, et, sur un deuxième noeud de sortie OUTL1703, la tension d'alimentation VCC_CMDL. Le circuit 1703 est, en outre, relié, de préférence connecté, au noeud d'entrée N_AC du convertisseur 1700. La tension d'alimentation VCC_CMDL est utilisé pour alimenter les circuits de commande de thyristors du premier étage 1701, et la tension VCC_CMDH est utilisée pour alimenter le circuit de commande d'un transistor du premier étage 1701. Selon une variante, représentée à la figure 20, le circuit 1703 pourrait ne fournir que la tension VCC_CMDL.

Le circuit 1703 comprend, entre le noeud N171 et le noeud N_AC, une diode Zener DZ171, un condensateur C171, une résistance R172, et une diode Zener DZ172. Plus particulièrement, l'anode de la diode Zener DZ171 est reliée, de préférence connectée, au noeud N171, et la cathode de la diode DZ171 est reliée, de préférence connectée, à un noeud N175. Une première électrode du condensateur C171 est reliée, de préférence connectée, au noeud N175, et une deuxième électrode du condensateur C171 est reliée, de préférence connectée, à une première borne de la résistance R172. Une deuxième borne de la résistance R172 est reliée, de préférence connectée, à un noeud N176. La cathode de la diode Zener DZ172 est reliée, de préférence connectée, au noeud N176, et l'anode de la diode DZ172 est reliée, de préférence connectée, au noeud N_AC.

Le circuit 1703 comprend, en outre, un condensateur C172 et une diode D173. Plus particulièrement, une première électrode du condensateur C172 est reliée, de préférence connectée, au noeud OUTH1703, et une deuxième électrode du condensateur C172 est reliée, de préférence connectée, au noeud N171. La cathode de la diode D173 est reliée, de préférence connectée, au noeud OUTH1703, et l'anode de la diode D173 est reliée, de préférence connectée, au noeud N175.

Le circuit 1703 comprend, en outre, un condensateur C173 et une diode D174. Plus particulièrement, une première électrode du condensateur C173 est reliée, de préférence connectée, au noeud OUTL1703, et une deuxième électrode du condensateur C173 est reliée, de préférence connectée, au noeud N_AC. La cathode de la diode D174 est reliée, de préférence connectée, au noeud OUTL1703, et l'anode de la diode D174 est reliée, de préférence connectée, au noeud N176.

Le circuit 1703 comprend, en outre, une résistance R173 et une diode D175. Une première borne de la résistance R173 est reliée, de préférence connectée, au noeud recevant le potentiel d'alimentation VCC, et une deuxième borne de la résistance R173 est reliée, de préférence connectée, au à l'anode de la diode D175. La cathode de la diode D175 est reliée, de préférence connectée au noeud N176.

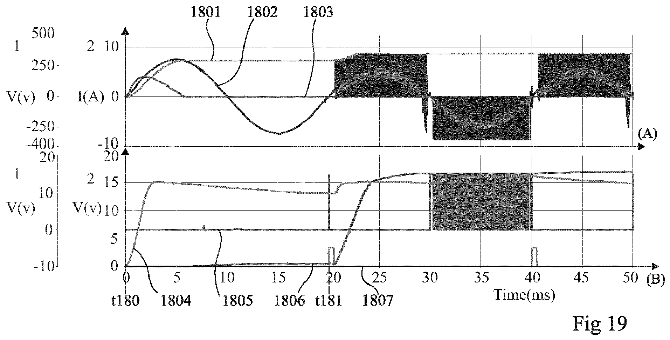

Le fonctionnement du convertisseur 1700 est décrit en relation avec la figure 19.

La figure 19 comprend deux graphiques (A) et (B) permettant d'illustrer le fonctionnement d'un convertisseur 1700 décrit en relation avec la figure 18.

Les graphiques (A) et (B) comprennent des courbes illustrant l'évolution temporelle de tensions et courant du convertisseur 1700, parmi lesquelles :
- une courbe 1801 représentant l'évolution temporelle de la tension entre les noeuds N172 et GND, appelée tension VBUS17, en figure 19 la courbe fait partie du graphique (A) et est de couleur verte et est en pointillée ;
- une courbe 1802 représentant l'évolution temporelle de la tension entre les noeuds N171 et N_AC, appelée tension VL17, en figure 19 la courbe fait partie du graphique (A) et est de couleur bleue ;
- une courbe 1803 représentant l'évolution temporelle du courant traversant l'inductance L171, en figure 19 la courbe fait partie du graphique (A) et est de couleur rouge ;
- une courbe 1804 représentant l'évolution temporelle de la tension d'alimentation VCC_CMDL fournie par le circuit 1703, c'est-à-dire la tension entre les noeuds OUTL1703 et N_AC, en figure 19 la courbe fait partie du graphique (B) et est de couleur verte ;
- une courbe 1805 représentant l'évolution temporelle de la tension d'alimentation VCC_CMDH fournie par le circuit 1703, c'est-à-dire la tension entre les noeuds OUTH1403 et N171, en figure 19 la courbe fait partie du graphique (B) et est de couleur rouge ;
- une courbe 1806 représentant l'évolution temporelle de la tension entre la grille du transistor M171 et le noeud N171, en figure 19 la courbe fait partie du graphique (B) et est de couleur rouge ; et
- une courbe 1807 représentant l'évolution temporelle de la tension de commande VT172 fournie au thyristor T172 par le circuit de commande CMD172, en figure 19 la courbe fait partie du graphique (B) et est de couleur verte.

Avant un instant initial t180, le convertisseur 200 ne reçoit pas de tension alternative VAC à convertir. Les tensions et courant dont l'évolution est représentée par les courbes 1801 à 1807 sont à un état de repos. Plus particulièrement, les tensions des courbes 1801, 1802, 1804 à 1807 ont toute une amplitude proche de 0 V, voir inférieure à 0 V, et le courant de la courbe 1803 a une amplitude de l'ordre de 0 A.

A partir de l'instant initial t180, et jusqu'à un instant t181, postérieur à l'instant t180, le convertisseur 200 commence à recevoir la tension alternative VAC à convertir et démarre. Pendant cette phase, l'amplitude de la tension VCC_CMDL augmente grâce à la tension fournie par la résistance R173, les diodes D171 et D172 et la résistance R171. Le circuit correcteur de facteur de puissance est en cours de démarrage.

A l'instant t181, le circuit correcteur de facteur de puissance démarre et le courant traversant l'inductance L171 est sinusoïdal (courbe 1803). Lorsque le courant traversant l'inductance L171 est positif, la tension VL17 (courbe 1802) est positive, et lorsque le courant traversant l'inductance L171 est négatif, la tension VL17 est négative. Avant que le circuit correcteur de facteur de puissance ne soit démarré, la tension VCC_CMDL (courbe 1804) est assez élevée pour alimenter le circuit de commande CMD172 du thyristor T172.

La figure 20 est un quatrième exemple de réalisation d'un convertisseur de tension 1900 du type du convertisseur de tension 100 décrit en relation avec la figure 1. Plus particulièrement, la figure 20 est un schéma électrique, partiellement sous forme de blocs, du convertisseur de tension 1900.

Comme le convertisseur de tension 100 de la figure 1, le convertisseur 1900 comprend :
- un premier étage de conversion 1901 ;
- un deuxième étage de conversion 1902 (to DC or AC), représenté sous forme de bloc ; et
- un circuit 1903 adapté à convertir une potentiel interne VINT19 du premier étage de conversion 1901 en une tension d'alimentation.

Comme décrit en relation avec la figure 1, le premier étage de conversion 1901 reçoit la tension d'entrée alternative VAC et fournit en sortie une tension intermédiaire VBUS19. Le deuxième étage de conversion 1902 reçoit la tension intermédiaire VBUS19 et le potentiel de référence du noeud GND, et fournit en sortie la tension de sortie VOUT19. Le circuit 1903 reçoit un autre potentiel interne VL19 de l'étage de conversion 1901 pour fournir en sortie une tension d'alimentation VCC_CMD.

Le premier étage de conversion 1901 comprend deux noeuds d'entrée IN_AC et N_AC recevant la tension d'entrée alternative VAC.

L'étage 1901 comprend, en outre, un circuit correcteur de facteur de puissance comportant une inductance L191 et deux transistors MOS de type N M191 et M192. Une première borne de l'inductance L191 est reliée, de préférence connectée, au noeud IN_AC, et une deuxième borne de l'inductance L191 est reliée, de préférence connectée, à un noeud N191. La source du transistor M191 est reliée, de préférence connectée, à un noeud N191, et le drain du transistor M191 est relié, de préférence connecté, à un noeud N192. La grille du transistor M191 reçoit un potentiel de commande VG191. Le potentiel VG191 est fourni par un circuit de commande non représenté. Ce circuit est alimenté, de façon optionnelle, par la tension VCC_CMDH. La source du transistor M192 est reliée, de préférence connectée, à un noeud N191, et le drain du transistor M192 est relié, de préférence connecté, à un noeud GND recevant un potentiel de référence, par exemple la masse. La grille du transistor M192 reçoit un potentiel de commande VG192.

La tension VL19 correspond à la tension entre les noeuds N191 et N_AC.

L'étage 1901 comprend, en outre, deux thyristors T191 et T192 et leurs circuits de commande respectifs CMD191 (CMD) et CMD192 (CMD). Le thyristor T191 a sa cathode reliée, de préférence connectée, à un noeud N192, et son anode reliée, de préférence connectée, au noeud N_AC. La gâchette du thyristor T191 est reliée, de préférence connectée, à une sortie du circuit de commande CMD191. Le circuit de commande CMD191 est alimenté par la tension VCC_CMD fournie par le circuit 1903. Le thyristor T192 a sa cathode reliée, de préférence connectée, à un noeud N_AC, et son anode reliée, de préférence connectée, au noeud GND. La gâchette du thyristor T192 est reliée, de préférence connectée, à une sortie du circuit de commande CMD192. Le circuit de commande CMD192 est alimenté par une tension non représentée. Des exemples plus détaillés des circuits de commande CMD191 et CMD192 sont décrits en relation avec les figures 3 et 4.

Le premier étage de conversion 1901 comprend, en outre, un condensateur C_BUS placé entre les noeuds N192 et GND, mais comprend aussi, de façon optionnelle, un ou plusieurs condensateurs de filtrage parmi lesquels :
- un condensateur Cf191 placé entre les noeuds IN_AC et N_AC ; et
- un condensateur Cf192 placé entre le noeud GND et un noeud recevant un potentiel d'alimentation continue VCC du convertisseur 200.

La tension aux bornes du condensateur C_BUS est noté VBUS19.

Le premier étage comprend, en outre, deux diodes D191 et D192 placées en série entre les noeuds N192 et GND, et une diode R191. Plus particulièrement, la cathode de la diode D191 est reliée, de préférence connectée, au noeud N192, et l'anode de la diode D191 est reliée, de préférence connectée, à un noeud N193. La cathode de la diode D192 est reliée, de préférence connectée, au noeud N193, et l'anode de la diode D191 est reliée, de préférence connectée, au noeud GND. Une première borne de la résistance R191 est reliée, de préférence connectée, au noeud N_AC et une deuxième borne de la résistance R191 est reliée, de préférence connectée, au noeud N193.

Le deuxième étage de conversion 1902 est du type du deuxième étage de conversion 202 du convertisseur 200 décrit en relation avec la figure 2.

Le deuxième étage 1902 comprend, en outre et pour finir, un étage de découpage comportant deux transistors M193 et M194. Les transistors M193 et M194 sont des transistors MOS de type N. La source du transistor M193 est reliée, de préférence connectée, à un noeud N194, et le drain du transistor M193 est relié, de préférence connecté, au noeud N192. La grille du transistor M193 reçoit un potentiel de commande VG193. La source du transistor M194 est reliée, de préférence connectée, au noeud GND, et le drain du transistor M194 est relié, de préférence connecté, au noeud N194. La grille du transistor M194 reçoit un potentiel de commande VG194.

La suite du deuxième étage 1902 est représentée par un bloc 1902' (to DC or AC).

Le circuit 1903 comprend un noeud d'entrée relié, de préférence connecté, au noeud N191 du convertisseur 1900 et fournit, sur un noeud de sortie OUT1903, la tension d'alimentation VCC_CMD. Le circuit 1903 est, en outre, relié, de préférence connecté, au noeud d'entrée N_AC du convertisseur 1900. La tension d'alimentation VCC_CMD est utilisé pour alimenter les circuits de commande de thyristors du premier étage 1901. Le circuit 1903 reçoit, en outre, la tension d'alimentation VCC du convertisseur 1900.

Le circuit 1903 comprend, entre le noeud N191 et le noeud N_AC, un condensateur C191, une résistance R192, et une diode Zener DZ191. Plus particulièrement, une première électrode du condensateur C191 est reliée, de préférence connectée, à un noeud N191, et une deuxième électrode du condensateur C191 est reliée, de préférence connectée, à une première borne de la résistance R192. Une deuxième borne de la résistance R192 est reliée, de préférence connectée, à un noeud N195. La cathode de la diode Zener DZ191 est reliée, de préférence connectée, au noeud N195, et l'anode de la diode DZ191 est reliée, de préférence connectée, au noeud N_AC.

Le circuit 1903 comprend, en outre, un condensateur C192 et une diode D193. Plus particulièrement, une première électrode du condensateur C192 est reliée, de préférence connectée, au noeud OUT1903, et une deuxième électrode du condensateur C192 est reliée, de préférence connectée, au noeud N_AC. La cathode de la diode D193 est reliée, de préférence connectée, au noeud OUT1903, et l'anode de la diode D193 est reliée, de préférence connectée, au noeud N195.

Le circuit 1903 comprend, en outre, une résistance R193 placée entre le noeud N195 et le noeud recevant le potentiel d'alimentation VCC.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Le circuit de précharge décrit en relation avec la figure 11, peut être appliqué aux modes de réalisation des figures 18 et 20.

Enfin, la mise en oeuvre pratique des modes de réalisation et variantes décrits est à la portée de la personne du métier à partir des indications fonctionnelles données ci-dessus.

## Revendications

1. Circuit convertisseur (100 ; 200 ; 1400 ; 1500 ; 1700 ; 1900) d'une première tension alternative (VAC) en une deuxième tension (VOUT ; VOUT14 ; VOUT15 ; VOUT17 ; VOUT19) comprenant :
- un premier thyristor (1011 ; T1 ; T141 ; T151 ; T171 ; T191) ;
- un premier circuit de commande (1012 ; 300 ; 400 ; CMD1 ; CMD141 ; CMD151 ; CMD171 ; CMD191) du premier thyristor (1011 ; T1 ; T141 ; T151 ; T171 ; T191) ;
- un circuit correcteur de facteur de puissance (1013) comprenant une bobine (1014 ; L1 ; L141 ; L151 ; L171 ; L191) ; et
- un premier circuit (103 ; 203 ; 500 ; 800 ; 1100 ; 1403 ; 1503 ; 1703 ; 1903) adapté à convertir une troisième tension (VINT2) en une quatrième tension continue (VCC_CMD ; VCC_CMDH, VCC_CMDL),
dans lequel la troisième tension (VINT2) correspond à la différence de potentiel entre le potentiel d'un premier noeud (N3, N4, N5 ; N141, N142, N143 ; N152 ; N171 ; N191) relié à un noeud de sortie de la bobine (1014 ; L1 ; L141 ; L151 ; L171 ; L191), et un potentiel de référence (N2, N_AC) ; et
la quatrième tension continue (VCC_CMD ; VCC_CMDL) est configurée pour alimenter le premier circuit de commande (1012 ; 300 ; 400 ; CMD1 ; CMD141 ; CMD151 ; CMD171 ; CMD191) du premier thyristor (1011 ; T1 ; T141 ; T151 ; T171 ; T191), et est référencée par rapport au même potentiel de référence (, N2, N_AC ; N152 ; N171) que la troisième tension.

2. Circuit selon la revendication 1, dans lequel le premier circuit (103 ; 203 ; 500 ; 800 ; 1100 ; 1403 ; 1503 ; 1703 ; 1903) comprend :
- un deuxième noeud (IN5 ; IN8 ; IN11 ; N152) recevant la troisième tension ;
- un troisième noeud (OUT5 ; OUT8 ; OUT11 ; OUT1403 ; OUTL1503, OUTH1503 ; OUT1703 ; OUT1903) fournissant la quatrième tension ; et
- un quatrième noeud (REF5 ; REF8 ; REF11 ; N_AC) recevant le potentiel de référence.

3. Circuit selon la revendication 2, dans lequel le premier circuit (500) comprend :
- un premier transistor bipolaire (T51) dont le collecteur est relié au deuxième noeud (IN5), et l'émetteur est relié au troisième noeud (OUT5) ;
- une première diode Zener (DZ51) dont l'anode est reliée au troisième noeud (OUT5) et la cathode est reliée à la base du premier transistor (T51) ;
- une deuxième diode Zener (DZ52) dont l'anode est reliée au quatrième noeud (REF5) et la cathode est reliée à la base du premier transistor (T51) ; et
- un premier condensateur (C51) reliant troisième noeud (OUT5) au le quatrième noeud (REF5).

4. Circuit selon la revendication 2, dans lequel le premier circuit (800, 1100 ; 1403) comprend :
- un deuxième condensateur (C81 ; C111 ; C141) dont une première électrode est reliée au deuxième noeud (IN8 ; IN11 ; IN14) ;
- une troisième diode Zener (DZ81 ; DZ111 ; DZ141) dont l'anode est reliée au quatrième noeud (REF8 ; REF11) et la cathode est reliée à une deuxième électrode du deuxième condensateur (C81 ; C111 ; C141) ;
- une première diode (D81 ; D111 ; D141) dont l'anode est reliée à l'anode de la diode Zener (DZ81 ; DZ111 ; DZ141) et la cathode est reliée au troisième noeud (OUT8 ; OUT11) ; et
- un troisième condensateur (C82 ; C112 ; C142) reliant le troisième noeud (OUT8 ; OUT11 ; OUT14) et le quatrième noeud (REF8 ; REF11).

5. Circuit selon la revendication 4, dans lequel le premier circuit (1100) comprend, en outre un circuit de précharge comprenant une deuxième diode (D112) dont la cathode est reliée au troisième noeud (OUT11) et dont l'anode est reliée à un cinquième noeud (SUPP11) recevant une tension d'alimentation (VCC) du circuit convertisseur.

6. Circuit selon la revendication 2, dans lequel le premier circuit (1503) comprend :
- une quatrième diode Zener (DZ151) dont l'anode est reliée au deuxième noeud (N152) ;
- un quatrième condensateur (C151) dont une première électrode est reliée à la cathode de la quatrième diode Zener (DZ151) ;
- une cinquième diode Zener (DZ152) dont l'anode est reliée au quatrième noeud (N_AC) et dont la cathode est reliée à une deuxième électrode du quatrième condensateur (C151) ;
- une troisième diode (D152) dont l'anode est reliée à la cathode de la cinquième diode Zener (DZ152) et dont la cathode est reliée au troisième noeud (OUTL1503) ;
- un cinquième condensateur (C153) reliant le troisième noeud (OUTL1503) et le quatrième noeud (N_AC) ;
- une sixième diode (D151) dont l'anode est reliée à la cathode de la quatrième diode Zener (DZ151) et dont la cathode est reliée à un quatrième noeud (OUTH1503) ; et
- un sixième condensateur (C152) reliant le quatrième noeud (OUTH1503) et le deuxième noeud (N152).

7. Circuit selon la revendication 6, dans lequel le premier circuit (1503) est adapté à fournir, en outre, une cinquième tension continue (VDD_CMDH) configurée pour alimenter un deuxième circuit de commande (CMDM151) d'un deuxième transistor de type NMOS (M151) faisant partie du circuit correcteur de facteur de puissance.

8. Circuit selon l'une quelconque des revendications 1 à 7, dans lequel le premier noeud (N3 ; N141 ; N152 ; N171 ; N191) est le noeud de sortie de la bobine (1014 ; L1 ; L141 ; L151 ; L171 ; L191).

9. Circuit selon l'une quelconque des revendications 1 à 5, dans lequel le premier noeud (N5 ; N142, N143) est relié au noeud de sortie de la bobine par l'intermédiaire d'au moins un transistor de type NMOS.

10. Circuit selon l'une quelconque des revendications 1 à 5 ou 9, dans lequel le premier noeud (N4, N5) est relié au noeud de sortie de la bobine par l'intermédiaire d'une diode (D_PW1).

11. Circuit selon l'une quelconque des revendications 1 à 5, dans lequel le premier noeud (N5 ; N143) est relié au noeud de sortie de la bobine par l'intermédiaire d'au moins deux transistors de type NMOS.

12. Circuit selon l'une quelconque des revendications 1 à 11, comprenant un premier étage de conversion (101 ; 201 ; 1401 ; 1501 ; 1701 ; 1901) comprenant :
- le premier thyristor (1011 ; T1 ; T141 ; T151 ; T171 ; T191) ;
- le premier circuit de commande (1012 ; 300 ; 400 ; CMD1 ; CMD141 ; CMD151 ; CMD171 ; CMD191) du premier thyristor (1011 ; T1 ; T141 ; T151 ; T171 ; T191) ;
- un circuit correcteur de facteur de puissance (1013) comprenant une bobine (1014 ; L1 ; L141 ; L151 ; L171 ; L191),
le premier noeud étant un noeud de sortie (N5 ; N143 ; N153 ; N174 ; N194) du premier étage de conversion (101 ; 201 ; 1401 ; 1501 ; 1701 ; 1901).

13. Circuit selon l'une quelconque des revendications 1 à 12, comprenant en outre un deuxième thyristor (T2 ; T142 ; T152 ; T172 ; T192) et un deuxième circuit de commande (300 ; 400 ; CMD1 ; CMD142 ; CMD152 ; CMD172 ; CMD192).

14. Circuit selon l'une quelconque des revendications 1 à 13, dans lequel la deuxième tension est une tension alternative.

15. Circuit selon l'une quelconque des revendications 1 à 13, dans lequel la deuxième tension est une tension continue.
